# FASCICULE DE BREVET EUROPEEN

(11) **EP 2 082 359 B1**
(45) Date de publication et mention de la délivrance du brevet: **23.10.2013**
(21) Numéro de dépôt: 07866468.7
(22) Date de dépôt: 30.10.2007
(51) Int. Cl.: G06K 17/00

(54) **PROCEDE ET DISPOSITIF DE PERSONNALISATION D'UNE ENTITE ELECTRONIQUE PORTABLE**
VERFAHREN UND EINRICHTUNG ZUM ANPASSEN EINER TRAGBAREN ELEKTRONISCHEN ENTITÄT
METHOD AND DEVICE FOR CUSTOMISING A PORTABLE ELECTRONIC ENTITY

(30) Priorité: 07.11.2006 FR 0654767
(43) Date de publication de la demande: 29.07.2009
(73) Titulaire: Oberthur Technologies, 92700 Colombes (FR)
(72) Inventeur: MOUNIER, Régis, 92100 Boulogne-Billancourt (FR); LOUIS, Jean-Marc, 95220 Herblay (FR)
(74) Mandataire: Quantin, Bruno Marie Henri
(86) Numéro de dépôt international: PCT/FR2007/001799
(87) Numéro de publication internationale: WO 2008/065265

(56) Documents cités:
- EP-A- 1 434 168
- EP-A1- 1 376 453
- US-B1- 6 196 459
- US-B1- 6 575 360

## Description

L'invention concerne un procédé et un dispositif de personnalisation d'une entité électronique portable. Elle s'applique, en particulier, à la personnalisation de cartes à microcircuit en fonction de profils d'utilisateurs.

L'invention se rapporte à des entités électroniques portables comprenant, notamment, des cartes à microcircuit, les cartes à mémoire telle qu'une carte mémoire de stockage de données numériques, par exemple une carte « Secure Digital » ou une carte SD (marque déposée), une clé USB (acronyme de « universal serial bus » pour bus série universel), une carte MultiMediaCard, appelée aussi MMC (marques déposées), une carte Smartmedia (marque déposée), une mini carte multimédia ou un PDA (acronyme de « Personal Digital Assistant » pour assistant numérique personnel), aussi appelé organiseur. La carte à microcircuit est, par exemple, conforme à la norme ISO 7816. Il peut, par exemple, s'agir d'une carte à microcontrôleur sécurisé.

L'utilisation d'une entité électronique dans un cadre applicatif déterminé implique la mémorisation, dans l'entité électronique, de données et/ou de programmes susceptibles d'être utilisés dans ce cadre. C'est pourquoi on a fréquemment recours, en particulier pour les entités électroniques portables à une étape de personnalisation au cours de laquelle on inscrit dans une mémoire de l'entité électronique les données qui lui sont spécifiques, telles que par exemple l'identité du porteur de la carte.

La personnalisation est réalisée par une station de personnalisation qui effectue un traitement des données de personnalisation. On observe que cette personnalisation ne se limite pas à la personnalisation « électrique » de la mémoire mais peut, au contraire, s'étendre à la personnalisation graphique ou physique de l'entité électronique portable, par exemple par des techniques d'impression ou d'embossage.

L'entité électronique portable comporte une mémoire non volatile réinscriptible, par exemple, une mémoire EEPROM (acronyme de "Electrically Erasable and Programmable Read Only Memory" pour mémoire morte programmable et effaçable électriquement). La personnalisation électrique consiste essentiellement en une étape d'initialisation de cette mémoire non volatile et ainsi de l'entité électronique portable. Cette mémoire est particulièrement adaptée à la mémorisation de ce type de données qui varient d'une entité électronique à l'autre.

Il est à noter qu'avant cette initialisation, l'entité électronique portable ne peut pas fonctionner. Elle peut seulement être personnalisée. De même, avant l'étape de personnalisation, la mémoire non volatile peut-être vierge ou quasiment vierge, c'est-à-dire qu'elle n'est pas initialisée.

L'étape d'initialisation de la mémoire non volatile est une étape durant laquelle on mémorise, dans la mémoire non volatile, des informations spécifiques des fonctions applicatives de l'entité électronique portable et/ou spécifiques de chaque porteur de l'entité électronique portable. Les données de personnalisation sont généralement mémorisées dans une mémoire non-volatile réinscriptible.

La structure globale des données de personnalisation à inscrire dans cette mémoire est, en revanche, commune à un ensemble de cartes du même type et participe ainsi à la définition d'un profil de personnalisation associé à ce type de carte.

Un profil de personnalisation est ainsi un ensemble de données associées à un type de carte et qui définissent les caractéristiques générales de la personnalisation des cartes de ce type, telles que la structure des données, y compris, éventuellement, de programme, et les données communes à inscrire dans l'entité électronique lors de la personnalisation, ou encore des données de personnalisation physique, par exemple caractères à embosser ou codage de la bande magnétique, ou graphique, par exemple logo à imprimer sur la surface de la carte.

La définition d'un profil de personnalisation est particulièrement complexe puisqu'elle doit respecter, de manière cohérente, un ensemble de critères liés à la structure et à l'utilisation future de l'entité électronique, à savoir, par exemple, les normes, par exemple GSM (acronyme de « global system for mobile » pour système global pour mobiles) en téléphonie mobile ou EMV (acronyme de Europay, Mastercard et Visa, marques déposées), dans le domaine bancaire, et les applications, par exemple Visa ou Mastercard (marques déposées) existantes, et l'organisation interne matérielle de l'entité électronique.

Une telle définition est donc, classiquement, assez lourde à mettre en oeuvre et un risque d'erreur ne peut être écarté même lorsque la définition du profil est pratiquée par des personnels expérimentés.

Dans une carte à microcircuit conforme à la norme ISO7816, le microcircuit est généralement un microcontrôleur sécurisé contenant dans sa mémoire ROM un système d'exploitation et/ou des applications. L'image de cette mémoire morte, qu'on appelle « masque », est définie généralement par le fabriquant de carte lors d'une étape de conception, et peut évoluer au cours du temps, notamment à l'occasion d'évolution ou de correction de bug.

Lors de la fabrication des cartes à microcircuit, les microcontrôleurs sont livrés par la fabriquant de semi-conducteur avec un masque donné. Le système d'exploitation de chaque masque comporte un codage spécifique des commandes.

Dans le procédé décrit dans le brevet US 5,889,941, ce codage est mémorisé au cours de l'étape de personnalisation dans un fichier de système d'exploitation.

Quant aux cartes à puce, elles sont généralement fabriquées et personnalisées par lots de cartes d'un même type (par exemple dans le domaine bancaire, même banque, même type de carte, ...). Dans chaque lot, on a un seul type de masque.

C'est ainsi que, dans le procédé décrit dans le brevet US 5,889,941, cité plus haut, on n'utilise qu'un seul fichier de système d'exploitation par lot, donc chaque microcontrôleur des cartes d'un même lot a le même masque. C'est également le procédé décrit dans le brevet US 6,196,459, où on travaille par lot.

On comprend très bien qu'il soit particulièrement intéressant d'être en mesure de personnaliser des cartes dont les masques sont différents au sein d'un même lot, par exemple pour simplifier la gestion de stock de microcontrôleurs.

On connaît, dans l'art antérieur, une solution qui permet de réaliser une personnalisation de chaque carte avec des données relatives à une personne, décrite dans le brevet EP 0 706 150. Cependant, cette solution a l'inconvénient de nécessiter une écriture d'un identifiant dans la mémoire réinscriptible de la carte, ce qui augmente les coûts, car il faut, pour cela, utiliser une machine de personnalisation.

La demande de brevet européen EP 1 434 168 décrit un procédé de fabrication de cartes personnalisées. Lors de la phase de personnalisation une marque précédemment appliquée, propre à un opérateur auquel est destinée la carte, est lue afin de déterminer l'opérateur par le biais d'une base de données avant d'enregistrer des données de personnalisation.

Dans le procédé décrit dans le brevet US 6,196,459, un identifiant de l'objet carte est transmis par un contrôleur à la station de personnalisation, puis la station de personnalisation transmet l'identifiant au serveur.

Dans le brevet US 6,575,360, un système de personnalisation comporte un système de contrôle de carte à puce et un système d'administration d'une carte à puce. Le système de contrôle de carte à puce assure l'interface avec la carte à puce et transmet de façon transparente, c'est-à-dire sans traitement autre que le décodage ou l'encodage, d'une part, les commandes élaborées par le système d'administration à destination de la carte à la puce et, d'autre part, les réponses à ces commandes élaborées par la carte à puce à destination du système d'administration.

Selon ce brevet, l'ATR (acronyme de « answer to reset » pour réponse à la mise sous tension) peut faire partie de la requête d'exécution d'application et concerne le protocole de communication avec lequel on peut communiquer avec la carte (type de protocole, fréquence,...). De plus, dans ce brevet, il n'est pas envisagé de traiter des lots de cartes à priori différentes.

Le système décrit dans ce brevet présente également l'inconvénient de nécessiter des échanges importants entre le système de contrôle de la carte à puce et le système d'administration de la carte à puce. De plus, le système de contrôle est en attente, c'est-à-dire n'effectue aucun traitement, entre le moment où il fournit une réponse élaborée par la carte au système d'administration et le moment où il reçoit une nouvelle commande de la part du système d'administration. En conséquence, dans un système où on a doit traiter plusieurs milliers ou dizaines de milliers de cartes par heures, ces échanges peuvent limiter la cadence de personnalisation des cartes, notamment lorsqu'un seul système d'administration est utilisé pour la communication avec plusieurs stations de personnalisation.

La présente invention vise à remédier à ces inconvénients et, en particulier, à permettre la personnalisation de cartes différentes avec le même système de personnalisation, c'est-à-dire serveur et station de personnalisation.

A cet effet, la présente invention vise, selon un premier aspect, un dispositif de personnalisation d'une entité électronique portable, selon la revendication 1.

Grâce à ces dispositions, le dispositif de personnalisation peut effectuer simplement la personnalisation de lots d'entités électroniques comportant des plates-formes différentes en termes de circuits et/ou de systèmes d'exploitation. Du fait que le premier identifiant provient de la mémoire non réinscriptible (« ROM ») de l'entité électronique portable, ce premier identifiant est disponible dès avant l'étape de personnalisation et peut identifier des caractéristiques techniques, matérielles et/ou logicielles de l'entité électronique portable.

On observe que le dispositif de personnalisation tel que succinctement exposé ci-dessus peut être incorporé dans un serveur de personnalisation ou dans une station de personnalisation.

Selon des caractéristiques particulières, les moyens de mémorisation d'une pluralité de groupes de données de personnalisation sont adaptés à ce que chaque groupe de données de personnalisation soit associé à un second identifiant, en ce qu'il comporte des moyens d'association d'un second identifiant audit premier identifiant, et en ce que les moyens de sélection sont adaptés à sélectionner au moins un groupe de données de personnalisation en fonction du second identifiant correspondant au premier identifiant.

Grâce à ces dispositions, la mise en relation des données de personnalisation avec les premiers identifiants est plus souple puisque le même groupe de données de personnalisation peut être associé à plusieurs premiers identifiants, sans que tous les groupes de données de personnalisation associés à ces premiers identifiants soient communs. De plus, les groupes de données de personnalisation peuvent être générés indépendamment des premiers identifiants et mis, ensuite, en relation avec certains des premiers identifiants.

Selon des caractéristiques particulières, les moyens de communication sont adaptés à ce que ladite entité électronique soit conforme au moins en partie à la norme ISO7816 et à ce que ledit message soit un ATR (acronyme de « Answer to Reset » pour réponse à la mise sous tension).

Grâce à chacune de ces dispositions, dès la mise sous tension de l'entité électronique portable, le dispositif de personnalisation tel que succinctement exposé ci-dessus dispose du premier identifiant. Le processus de personnalisation n'a donc pas besoin d'interroger l'entité électronique portable et peut donc être à la fois plus rapide, moins onéreux et plus fiable.

Selon des caractéristiques particulières, les moyens de communication sont adaptés à effectuer une remise à zéro de l'entité électronique portable et à recevoir le premier identifiant dans au moins une partie d'un message fourni par l'entité électronique portable lors de sa remise à zéro.

Selon des caractéristiques particulières, les moyens de communication sont adaptés à recevoir un premier identifiant qui comporte au moins un octet dit « historiques » selon la norme ISO7816 (octets T1, T2, ...T9) de l'ATR.

Grâce à chacune de ces dispositions, la mise en oeuvre de la présente invention est particulièrement aisée et fiable puisque le message fourni par l'entité électronique portable lors de sa mise sous tension est toujours identique et ne dépend pas d'une instruction spécifique émise par la station de personnalisation. L'invention est donc particulièrement pratique à mettre en oeuvre notamment dans une carte à microcircuit.

Selon des caractéristiques particulières, les moyens de mémorisation sont adaptés à ce que lesdits groupes de données de personnalisation comportent au moins une image de la structure de la mémoire non volatile de l'entité électronique portable. On peut ainsi préparer les données de personnalisation, pour que, lorsque le dispositif obtient le premier identifiant, par exemple l'ATR, il y ait moins de traitement à réaliser pour obtenir les données de personnalisation.

Selon des caractéristiques particulières, ladite image de structure est, en outre, représentative du contenu et de la taille de fichier de l'entité électronique portable.

Selon des caractéristiques particulières, ladite image de structure est représentative des zones mémoires de l'entité électronique portable contenant des variables, ainsi que leur valeur, en dehors des données spécifiques au futur porteur de l'entité électronique portable.

Selon des caractéristiques particulières, les moyens de personnalisation sont adaptés à compléter les champs vierges de ladite image de structure avec des données de personnalisation.

Selon des caractéristiques particulières, l'entité électronique est une carte à microcontrôleur sécurisé conforme au moins en partie à la norme ISO7816.

Selon des caractéristiques particulières, les moyens de personnalisation sont adapté à former au moins une instruction de personnalisation à partir dudit groupe de données de personnalisation sélectionné.

Selon des caractéristiques particulières, au moins une instruction de personnalisation est une instruction directement compréhensible et exécutable par l'entité électronique portable.

Grâce à ces dispositions, la station de personnalisation n'a pas à interpréter les instructions de personnalisation directement compréhensibles et exécutables par l'entité électronique portable et ne fait que les lui transmettre.

Selon des caractéristiques particulières, les moyens de personnalisation sont adaptés à ce qu'au moins une instruction de personnalisation permette l'inscription, par l'entité électronique portable, de données dans la mémoire de l'entité électronique portable.

Selon des caractéristiques particulières, les moyens de personnalisation sont adaptés à ce qu'au moins une instruction de personnalisation soit spécifique au porteur à venir de l'entité électronique portable.

Selon des caractéristiques particulières, le dispositif tel que succinctement exposé ci-dessus comporte :
- des moyens de traitement adaptés à traiter lesdites données de personnalisation et à engendrer au moins un groupe d'instructions de personnalisation de l'entité électronique portable, au moins un groupe d'instructions de personnalisation comportant au moins une instruction de contrôle de personnalisation permettant à une station de personnalisation de contrôler la bonne exécution d'au moins une instruction de personnalisation et
- des moyens d'émission de chaque groupe d'instructions de personnalisation.

Ces dispositions particulières concernent particulièrement un dispositif constitué d'un serveur de personnalisation. Grâce à chacune de ces dispositions, afin d'améliorer les cadences de personnalisation:
on fait effectuer l'essentiel des traitements sur un serveur de personnalisation, limitant ainsi les traitements réalisés par les stations de personnalisation.
- on limite les échanges de données entre les stations de personnalisation et le serveur de personnalisation.

Ces objectifs sont atteints notamment grâce à l'élaboration de groupes d'instructions de personnalisation par le serveur de personnalisation. Ainsi, la station de personnalisation n'a pas à élaborer les instructions de personnalisation et n'a pas à requérir une à une les instructions de personnalisation.

Enfin, le serveur de personnalisation à ainsi également un rôle de définition des contrôles de la personnalisation qui sont exécutés par la station de personnalisation. La prise en charge, par la station de personnalisation, de ces instructions de contrôle définies par le dispositif de personnalisation permet de limiter les échanges entre les stations de personnalisation et le serveur, tout en limitant an maximum les traitements effectués par les stations de personnalisation.

Selon des caractéristiques particulières, les moyens de traitement sont, en outre, adaptés à engendrer au moins une instruction de compte-rendu de personnalisation permettant à la station de personnalisation de confirmer au dispositif la bonne exécution d'au moins une partie d'un groupe d'instructions de personnalisation, et à insérer au moins une instruction de compte-rendu dans au moins un groupe d'instructions de personnalisation, les moyens d'émission étant adaptés à émettre au moins une instruction de compte-rendu à destination de la station de personnalisation, le dispositif comportant, en outre, des moyens de réception d'au moins un compte-rendu en provenance de la station de personnalisation. Ainsi, le dispositif peut vérifier la bonne réalisation de la personnalisation.

Les échanges d'instructions entre le dispositif de personnalisation et la station de personnalisation sont ainsi limités à des groupes d'instructions de personnalisation comportant, à la fois, des instructions à faire exécuter à l'entité électronique portable et des instructions de compte-rendu.

Selon des caractéristiques particulières, le dispositif tel que succinctement exposé ci-dessus comporte, en outre, des moyens d'analyse aptes à analyser au moins un compte-rendu reçu et à déclencher une action en fonction du résultat de ladite analyse. Ainsi, c'est le serveur qui assure le contrôle de personnalisation et donc on décharge les stations au maximum de taches de traitements.

Selon des caractéristiques particulières, les moyens de traitement comportent des moyens de définition de groupes d'instructions tels que le dispositif a besoin du compte-rendu d'exécution d'au moins une des précédentes instructions pour engendrer la première instruction du prochain groupe d'instructions de personnalisation. Grâce à ces dispositions, la taille des groupes d'instructions est maximale et les interactions entre le dispositif et la station de personnalisation sont réduites, ce qui augmente la cadence de personnalisation.

Selon des caractéristiques particulières, les moyens de communication sont adaptés à recevoir, en outre, au moins un identifiant de ladite station de personnalisation. Grâce à chacune de ces dispositions, le serveur peut engendrer les groupes d'instructions de personnalisation en fonction d'un identifiant de la station de personnalisation. Ce qui limite les risques d'erreur.

Selon des caractéristiques particulières, les moyens de traitement sont adaptés à engendrer au moins un groupe d'instructions de personnalisation en parallèle avec l'exécution d'un groupe d'instructions de personnalisation par la station de personnalisation. Grâce à ces dispositions, la cadence de personnalisation peut être augmentée car dès qu'un groupe d'instructions de personnalisation a été exécuté par la station de personnalisation, un autre groupe d'instructions de personnalisation peut lui être envoyé par le dispositif, sans avoir à attendre que ce nouveau groupe d'instructions de personnalisation soit préparé.

Selon des caractéristiques particulières, le dispositif tel que succinctement exposé ci-dessus comporte :
- des moyens de réception d'au moins un groupe d'instructions de personnalisation de l'entité électronique portable, au moins un groupe d'instructions comportant au moins une instruction de contrôle de personnalisation permettant de contrôler la bonne exécution d'au moins une instruction de personnalisation,
- des moyens de transmission d'au moins une instruction de personnalisation à l'entité électronique portable et
- des moyens de traitement adaptés à traiter chaque instruction de contrôle pour contrôler la bonne exécution d'au moins une instruction de personnalisation par l'entité électronique portable.

Ces dispositions s'appliquent plus particulièrement aux stations de personnalisation. Grâce à ces dispositions, afin d'améliorer les cadences de personnalisation :
- on fait effectuer l'essentiel des traitements sur un serveur de personnalisation, limitant ainsi les traitements réalisés par les stations de personnalisation.
- on limite les échanges de données entre les stations de personnalisation et le serveur de personnalisation.

Ces objectifs sont atteints notamment grâce à l'élaboration de groupes d'instructions de personnalisation par le serveur de personnalisation. Ainsi, la station de personnalisation n'a pas à élaborer les instructions de personnalisation et n'a pas à requérir une à une les instructions de personnalisation.

Enfin, le serveur de personnalisation à ainsi également un rôle de définition des contrôles de la personnalisation qui sont exécutés par la station de personnalisation. La prise en charge, par la station de personnalisation, de ces instructions de contrôle définies par le dispositif de personnalisation permet de limiter les échanges entre les stations de personnalisation et le serveur, tout en limitant au maximum les traitements effectués par les stations de personnalisation.

Selon des caractéristiques particulières, les moyens de traitement sont adaptés à réaliser au moins une instruction de contrôle d'au moins une instruction de personnalisation après que les moyens de transmission aient transmis, à l'entité électronique portable, une autre instruction de personnalisation non concernée par ladite instruction de contrôle. Ainsi, en attendant la réponse de l'entité électronique à une instruction de personnalisation, la station de personnalisation peut analyser la réponse de l'instruction de personnalisation précédente et insérer les informations nécessaires dans ledit compte-rendu.

Selon des caractéristiques particulières, les moyens de réception sont, en outre, adaptés à recevoir au moins une instruction de compte-rendu de personnalisation et les moyens de traitement sont, en outre, adaptés à préparer un compte-rendu d'exécution d'au moins un groupe d'instructions de personnalisation, le dispositif comportant, en outre, des moyens d'émission de compte-rendu à destination d'un serveur de personnalisation.

Selon des caractéristiques particulières, les moyens de réception sont adaptés à extraire au moins une instruction de compte-rendu d'au moins un groupe d'instructions de personnalisation.

Selon un deuxième aspect, la présente invention vise un procédé de personnalisation d'une entité électronique portable selon la revendication 17.

Les avantages, buts et caractéristiques du procédé objet du deuxième aspect de la présente invention étant similaires à ceux du dispositif objet du premier aspect de la présente invention, ils ne sont pas rappelés ici.

D'autres buts, caractéristiques et avantages de l'invention apparaîtront à la lumière de la description qui suit, faite, dans un but explicatif et nullement limitatif, en regard des dessins annexés, dans lesquels :
- la figure 1 représente, schématiquement, une entité électronique portable à la personnalisation de laquelle s'applique la présente invention,
- la figure 2 représente, schématiquement, un mode de réalisation particulier d'un système, d'un serveur et d'une station de personnalisation objets de la présente invention,
- la figure 3 représente, sous forme d'un logigramme, des étapes mises en oeuvre dans un mode de réalisation particulier du procédé de personnalisation objet de la présente invention,
- la figure 4 représente, sous forme d'un logigramme, des étapes mises en oeuvre dans un mode de réalisation particulier du procédé objet de la présente invention,
- les figures 5A à 5I représentent, schématiquement, des trames de données échangées entre différentes entités pour la mise en oeuvre d'un mode de réalisation particulier du procédé objet de la présente invention,
- la figure 6 représente, sous forme d'un logigramme, des étapes mises en oeuvre dans l'une des étapes illustrées en figure 3 et
- les figures 7A à 7I représentent, schématiquement, des trames de données échangées entre différentes entités pour la mise en oeuvre d'un mode de réalisation particulier du procédé objet de la présente invention.

L'invention concerne la personnalisation d'une entité électronique portable. On rappelle qu'au cours d'une telle personnalisation, on inscrit dans une mémoire de l'entité électronique les données qui sont spécifiques à cette entité, à des fonctions applicatives de l'entité, par exemple, types de services autorisés, fonctions de sécurité et cryptographiques parfois appelées données d'initialisation, et/ou spécifiques du porteur à venir de l'entité électronique portable, par exemple, le nom, le numéro de compte ou de téléphone, la date limite de validité et/ou une photographie. La personnalisation recouvre, en particulier, la réalisation de « softmasks » ou masques logiciels dans le cas d'une carte à microcircuit.

On observe que, dans certains documents d'art antérieur, on distingue la notion d'initialisation de celle de personnalisation. Au sens de la présente invention, ces deux notions sont regroupées sous le même terme de « personnalisation », même si ces étapes peuvent être distinctes, et réalisées, par exemple, par des stations de personnalisation différentes, par exemple pour des raisons de sécurité.

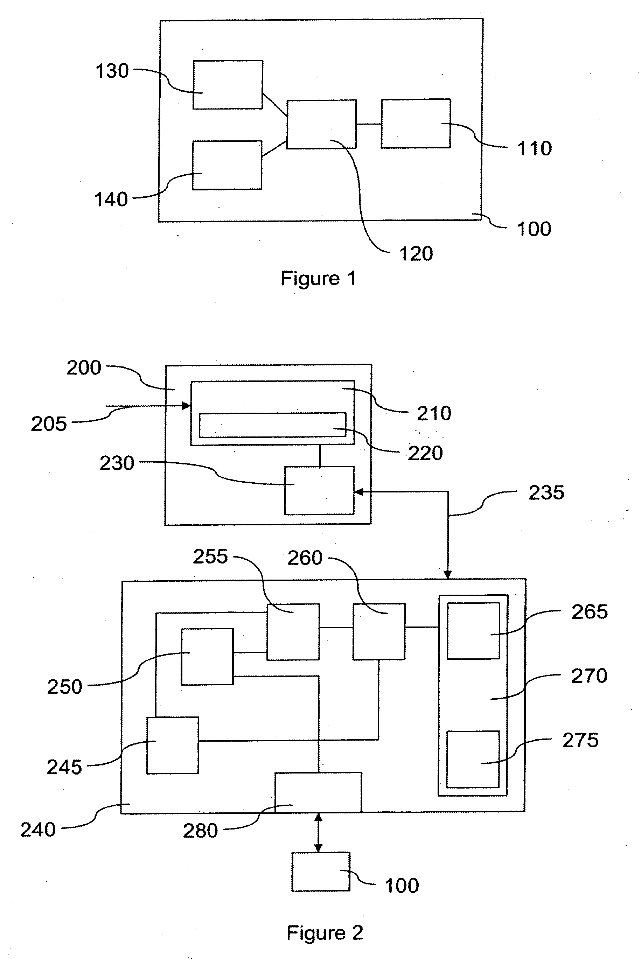

Un exemple d'entité électronique portable 100 est représentée en figure 1. Cette entité électronique portable 100 peut être une carte à microcircuit conforme à la norme ISO 7816, un document d'identification, une clef USB, un PDA, ou une carte à microcircuit par exemple conforme à la spécification MMC (MultiMediaCard) comprenant une mémoire par exemple de type Flash. Il peut aussi s'agir d'une carte à puce sans contact ou d'une carte appelée duale, c'est-à-dire comprenant une interface sans contact et une interface à contact, par exemple conforme à la norme ISO 14443. L'entité électronique portable 100 peut également être un passeport comportant dans l'épaisseur de la couverture un microcontrôleur sécurisé muni de moyens de communication sans contact conforme à la norme ISO 14443.

Dans le cas d'une carte à microcircuit conforme à la norme ISO 7816, et d'un point de vue applicatif, l'entité électronique portable 100 est notamment une carte d'identification sécurisée ou un document d'identification sécurisé, c'est-à-dire, par exemple, une carte bancaire, une carte d'identification d'un souscripteur d'un réseau de téléphonie mobile, ou une carte ou un document officiel ou de transport (carte de transport, carte d'identité, carte d'identification de véhicule automobile de type carte grise, ...).

Dans le mode de réalisation illustré en figure 1, l'entité électronique portable 100 est une carte à microcircuit de dimension de préférence conforme à la norme ISO 7816, notamment de 0,76 mm d'épaisseur. Elle comporte une interface d'entrées-sorties, d'alimentation et de fourniture de signal d'horloge 110, un microcontrôleur sécurisé 120, une mémoire morte ROM 130 et une mémoire réinscriptible EEPROM 140.

L'interface 110 peut comporter une interface de communication avec ou sans contact ou une interface appelée duale, c'est-à-dire comprenant une interface sans contact à courte portée et une interface à contact.

La mémoire morte 130 conserve un système d'exploitation qui permet à l'entité électronique portable 100 de fonctionner, c'est-à-dire de recevoir et d'exécuter des instructions ou commandes conforme à la norme ISO 7816, et de sécuriser l'entité électronique portable 100.

La personnalisation de l'entité électronique portable consiste, notamment, à initialiser la mémoire 140 en créant des fichiers et/ou des variables, par exemple sous la forme d'une structure connue sous le nom de TLV (acronyme de « tag length value » pour étiquette longueur valeur).

Selon un mode de fonctionnement, l'entité électronique portable 100 est de type esclave, dans le sens où l'entité électronique ne fait que répondre à des commandes du terminal maître. Dans une mise en oeuvre de l'invention au sein d'une carte à microcircuit, le terminal maître est, notamment, un lecteur de carte. Dans ce cas, l'entité électronique portable, à microcircuit, est préférentiellement conforme à la norme ISO 7816. Il s'agit généralement, dans ce cas, d'une carte à microcontrôleur sécurisé.

On observe, en figure 2, un système de personnalisation comportant un serveur de personnalisation 200 et une station de personnalisation 240 communiquant avec une entité électronique portable 100.

Le serveur de personnalisation 200 comporte une entrée de données de personnalisation 205, une mémoire non volatile 210, par exemple un disque dur, qui conserve un programme 220 et une unité centrale CPU 230. Le programme 220 est un programme de traitement et de contrôle engendrant des groupes d'instructions à partir de données de personnalisation et, éventuellement, d'un identifiant de l'entité électronique portable 100.

L'unité centrale CPU 230 et le programme 220 constituent, conjointement, des moyens de traitement adaptés à traiter des données de personnalisation et des identifiants d'entités électroniques portables et à engendrer au moins un groupe d'instructions de personnalisation de l'entité électronique portable. Préférentiellement, un groupe d'instructions de personnalisation comporte plus d'une instruction de personnalisation.

Les instructions engendrées par ces moyens de traitement comportent, préférentiellement, des instructions de personnalisation, des instructions de contrôle et des instructions de compte-rendu. Les instructions de personnalisation sont compréhensibles et exécutables par l'entité électronique portable 100. Conformément à la présente invention, ces instructions de personnalisation sont groupées, par le serveur de personnalisation 200, dans des groupes d'instructions de personnalisation, au moins un groupe d'instructions comportant une pluralité d'instructions de personnalisation et, de manière explicite ou implicite, au moins une instruction de contrôle et, éventuellement, au moins une instruction de compte-rendu.

Les instructions de contrôle peuvent être n'importe quelle instruction à l'attention de la station de personnalisation 240 lui permettant de contrôler l'exécution des instructions de personnalisation par l'entité électronique portable 100. Préférentiellement, les instructions de contrôle permettent à la station de personnalisation 240 de vérifier l'exécution de chaque instruction de personnalisation par l'entité électronique portable 100. Ainsi, ces instructions de contrôle peuvent définir une durée maximum pendant laquelle la station de personnalisation 240 peut attendre, de la part de l'entité électronique portable 100, une réponse à une instruction de personnalisation. Dans ce mode de réalisation, ladite instruction de contrôle est avantageusement la réponse au format APDU attendue à une instruction de personnalisation sous la forme d'une commande au format APDU.

Les instructions de compte-rendu déterminent dans quels cas et comment la station de personnalisation 240 doit communiquer avec le serveur de personnalisation 200 pour lui indiquer la bonne exécution d'au moins une partie d'un groupe d'instructions de personnalisation d'une entité électronique portable 100. Préférentiellement, l'instruction de compte-rendu est matérialisée implicitement par la fin du groupe d'instruction, c'est-à-dire qu'à chaque fois que la station de personnalisation 240 atteint la fin d'un groupe d'instructions, elle émet, à destination du serveur de personnalisation 200, un compte-rendu qui représente l'exécution, avec succès, de chaque instruction de contrôle. Ce type particulier d'instruction de compte-rendu est particulièrement simple à mettre en oeuvre. Dans d'autres variantes, le serveur de personnalisation 200 insère des instructions de compte-rendu explicite dans le groupe d'instructions de personnalisation.

Préférentiellement, les moyens de traitement et de contrôle, c'est-à-dire la mémoire non volatile 210, le programme 220 et l'unité de traitement 230 du serveur 200, comportent des moyens d'analyse des comptes rendus reçus de la station de personnalisation, ces moyens d'analyse comportant, notamment, la mémoire non volatile 210 et le programme 220.

Préférentiellement, les moyens de traitement et de contrôle sont adaptés à engendrer au moins un groupe d'instructions de personnalisation en parallèle avec l'exécution, par la station de personnalisation, d'un autre groupe d'instructions de personnalisation.

Avantageusement, les moyens de traitement et de contrôle du serveur 200 comportent des moyens de définition de groupes d'instructions tels que le serveur de personnalisation 200 a besoin du compte-rendu d'exécution d'au moins une des précédentes instructions pour engendrer la première instruction du prochain groupe d'instructions de personnalisation. Ainsi, au cours de la génération de groupes d'instructions, les moyens de définition de groupes d'instructions déterminent, pour chaque instruction, si sa génération nécessite un compte-rendu d'exécution d'au moins une des instructions précédentes. Si c'est le cas, les moyens de définition de groupes d'instructions finissent le précédent groupe d'instructions avant cette instruction à engendrer en fonction de ce compte-rendu et définissent un nouveau groupe d'instructions de personnalisation commençant avec ladite instruction. Ce fonctionnement des moyens de définition de groupes d'instructions permet de minimiser les échanges entre le serveur et la station de personnalisation.

Par exemple, la première instruction du nouveau groupe d'instructions est une instruction intervenant dans un processus cryptographique. Selon un autre exemple, il s'agit d'une instruction de mémorisation d'un élément dans l'entité électronique (par exemple une carte à mémoire flash), l'élément à mémoriser dépendant de l'espace mémoire disponible dans l'entité électronique. La première instruction du nouveau groupe d'instructions a donc besoin du compte-rendu de l'exécution d'une instruction de détermination de l'espace mémoire disponible dans ladite entité 100, instruction qui se trouve, comme exposé ci-dessus, dans le groupe d'instructions précédent.

En variante, le nombre d'instructions du groupe d'instructions peut être fixe ou déterminé par la taille attendue dudit compte-rendu.

Les moyens de traitement et de contrôle 210 à 230 comportent des moyens d'émission d'instructions de contrôle de la station de personnalisation 240. Cela permet au serveur de personnalisation 200 de contrôler la station de personnalisation 240 en utilisant certains des moyens utilisés pour les groupes d'instructions de personnalisation.

Les instructions de contrôle de la station de personnalisation 240 comportent, préférentiellement :
- une commande de mise sous tension de l'entité électronique portable,
- une commande de mise hors tension de l'entité électronique portable,
- une commande de sélection de l'horloge appliquée de l'entité électronique portable,
- une commande de détermination d'un protocole de communication entre la station de personnalisation et l'entité électronique portable. Dans un mode de réalisation où l'entité électronique portable est une carte à microcircuit, ladite commande de sélection de protocole permet une sélection du protocole T=1 et du protocole T=0 définit conformément à la norme ISO 7816. Dans un mode de réalisation, ladite commande de détermination d'un protocole permet de négocier la vitesse de transmission des données échangées entre l'entité électronique portable et la station de personnalisation,
- une commande de sélection de la tension appliquée à l'entité électronique,
- une commande de suspension de la personnalisation pendant un temps déterminé,
- une commande de spécification à la station de personnalisation d'un temps d'attente maximum pour obtenir une réponse de la part de l'entité électronique portable,
- une commande d'insertion d'un temps d'attente avant chaque commande envoyé à l'entité électronique portable,
- une commande d'insertion de donnée dans ledit compte-rendu émis à l'attention du serveur (avantage : permet de faciliter les contrôles réalisés par le serveur),
- une commande de fin de personnalisation et/ou
- une commande d'information d'anomalie de personnalisation.

Préférentiellement, les moyens d'émission sont adaptés à transmettre des groupes d'instructions de personnalisation à une pluralité de stations de personnalisation.

Le serveur de personnalisation 200 communique avec chaque station de personnalisation 240 selon un protocole quelconque, préférentiellement crypté, par l'intermédiaire de moyens d'émission 235 de chaque groupe d'instructions de personnalisation à destination de la station de personnalisation 240 de l'entité électronique portable 100. Réciproquement, les moyens d'émission 235 constituent des moyens de réception, de la part de la station de personnalisation 240, d'au moins un identifiant de l'entité électronique portable 100 et de compte-rendu d'exécution d'instructions de personnalisation.

La station de personnalisation 240 comporte une mémoire non volatile 270 conservant des pilotes 265 (en anglais « driver ») de pilotage de lecteur 280 d'entité électronique portable 100 et un programme de gestion des groupes d'instructions de personnalisation 275. La station de personnalisation 240 comporte aussi un générateur de signal d'horloge 245, une alimentation 250, un circuit 255 de pilotage du lecteur 280 et une unité centrale CPU 260.

L'unité centrale CPU 260 et le programme de gestion de groupes d'instructions 275 constituent des moyens de réception d'au moins un groupe d'instructions de personnalisation de l'entité électronique portable.

Le lecteur 280 est muni d'une interface avec ou sans contact avec l'entité électronique portable 100. Le lecteur 280 échange, avec l'entité électronique portable 100 des instructions, ou commandes, et des réponses, par exemple au format APDU, des signaux d'horloge et d'alimentation, selon des techniques connues dans le domaine des lecteurs de cartes à puce. L'unité centrale 260, le lecteur 280, les pilotes 265 et le programme de gestion 275 constituent ainsi des moyens de transmission d'au moins une instruction de personnalisation à l'entité électronique portable 100.

Le circuit 255 transmet au générateur 245 des commandes de détermination d'un signal d'horloge, à l'alimentation 250, des commandes de mise sous tension, de coupure d'alimentation et/ou de détermination de la tension et au lecteur 280, des commandes au format APDU.

Avant de décrire plus avant au moins un mode de réalisation particulier du dispositif et du procédé objets de la présente invention, on rappelle, ci-dessous, quelques détails sur la mise en oeuvre du calcul de l'ATR par une carte à puce conforme à la norme ISO7816, étant ici rappelé que la présente invention ne se limite pas à ce type de carte.

Le programme de calcul de l'ATR fait partie du masque (ou système d'exploitation) qui est mémorisé dans la mémoire morte ROM 130 de la l'entité électronique portable 100. Ce programme de calcul peut utiliser des informations de la mémoire réinscriptible non volatile EEPROM 120 et de la mémoire morte ROM 130. On observe que, pour le calcul de l'ATR, la mémoire 120 n'est pas initialisée.

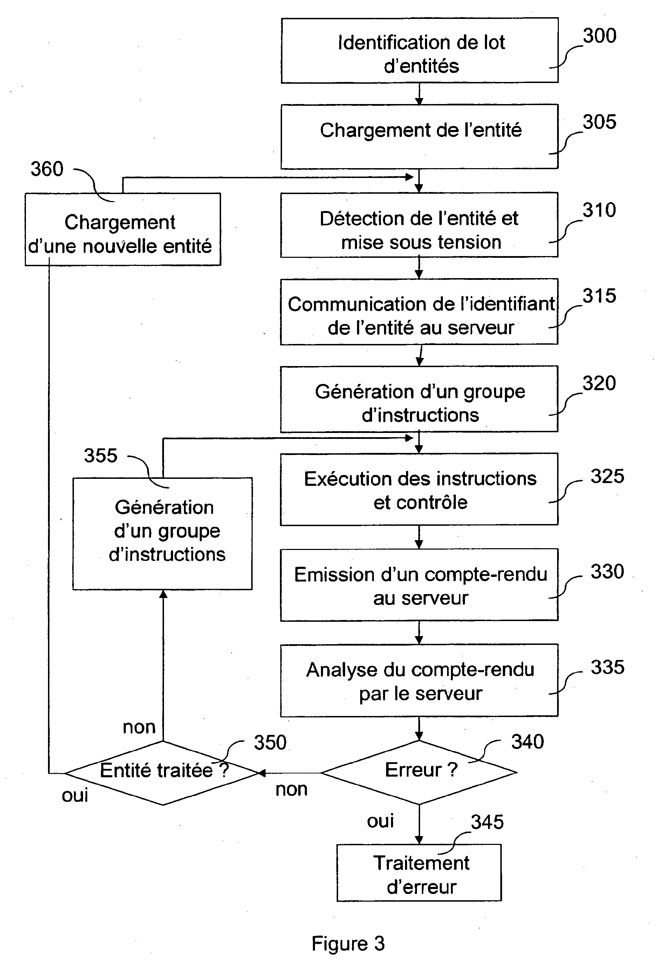

Le fonctionnement de la station de personnalisation 240 est illustré en figure 3.

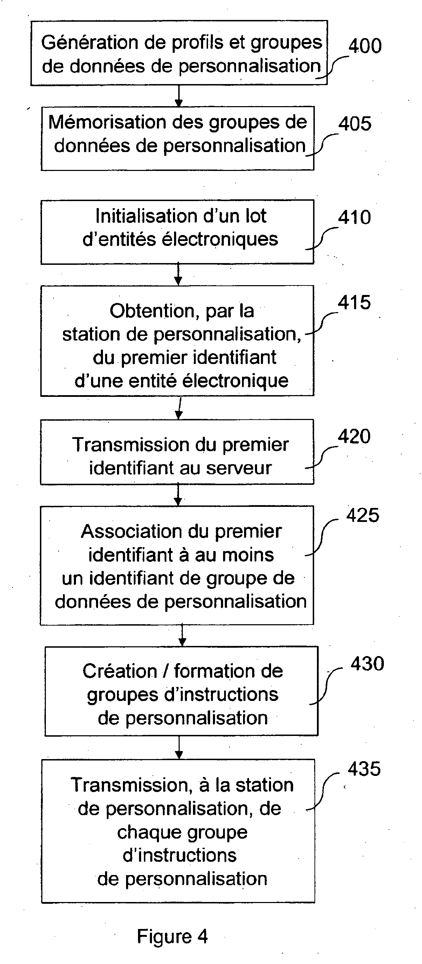

Au cours d'une étape 300, la station de personnalisation 240 envoie au serveur 200 une requête d'initialisation de la personnalisation comportant une information d'identification du lot d'entité 100 à personnaliser afin d'initialiser les moyens de traitement de contrôle de la personnalisation. Dans un mode de réalisation décrit plus loin en regard de la figure 4, cette information d'identification est un numéro de lot, auquel seront liées, par le serveur 200, des groupes de données de personnalisation nécessaires à la personnalisation des entités électroniques portables du lot. Cette requête peut comporter également des informations d'identification de la station de personnalisation 240, notamment le numéro de station dans l'atelier de personnalisation, permettant au serveur 200 de lui adresser la réponse et, éventuellement, le type de station de personnalisation 240, le serveur 200 pouvant avoir besoin de cette information pour connaître les instructions qu'il peut envoyer à destination de la station 240.

Le serveur 200 répond alors à station de personnalisation 240, soit par un message d'erreur, notamment si le numéro de lot est invalide, soit par un accusé de réception si aucun problème n'a été rencontré.

Au cours d'une étape 305, la station de personnalisation 240 effectue un chargement automatique d'une entité électronique portable 100 dans le lecteur 280, selon des techniques connues en soi. Puis, au cours d'une étape 310, la station de personnalisation 240 détecte et met sous tension l'entité électronique portable 100.

Au cours d'une étape 315, la station de personnalisation 240 reçoit l'identifiant de l'entité électronique portable 100 et communique l'identifiant de cette entité électronique portable 100 au serveur 200 ainsi qu'une requête de groupe d'instructions de personnalisation.

Au cours d'une étape 320, en fonction de l'identifiant de l'entité électronique portable et de données de personnalisation reçues par ailleurs, le serveur de personnalisation 200 génère un groupe d'instructions de personnalisation et le transmet à la station de personnalisation 240, préférentiellement sous forme cryptée, codée ou chiffrée.

Préférentiellement, au cours de cette étape 320, le serveur de personnalisation 200 définit le premier groupe d'instructions de personnalisation pour que ce groupe d'instructions ne s'achève que lorsque, pour générer l'instruction suivante, le serveur 200 ait besoin du compte-rendu d'exécution d'au moins une des instructions précédentes.

Le détail de l'étape 320 est donné, plus loin, en regard de la figure 4 ainsi qu'une description d'étapes préliminaires 400 et 405 mises en oeuvre par le serveur de personnalisation 200 ou par un autre ordinateur (non représenté) relié au serveur 200.

Au cours d'une étape 325, la station de personnalisation 240 réceptionne le groupe d'instructions de personnalisation et transmet chaque commande au format APDU du groupe d'instructions de personnalisation à l'entité électronique portable 100.

Les données de personnalisation de l'entité électronique portable sont alors mémorisées dans sa mémoire, généralement dans une mémoire non-volatile réinscriptible, par exemple une mémoire du type EEPROM, particulièrement adaptée à la mémorisation de ce type de données qui varient d'une entité à une autre.

Préférentiellement, la station de personnalisation 240 réalise au moins une instruction de contrôle d'au moins une instruction de personnalisation après avoir transmis, à l'entité électronique portable, une autre instruction de personnalisation non concernée par cette instruction de contrôle.

Si, pour une commande au format APDU, aucune instruction de contrôle intégrée dans le groupe d'instructions de personnalisation reçu ne concerne cette instruction au format APDU, la station 240 attend, de la part de l'entité 100, un code standard qui indique que l'instruction de personnalisation a bien été exécutée et vérifie ce code standard.

Sinon, la station 240 attend une réponse au format APDU spécifique dans un intervalle de temps spécifique, si cette réponse et/ou cet intervalle de temps spécifiques sont spécifiés dans une instruction de contrôle incorporé dans le groupe d'instructions de personnalisation reçu.

En cas de problème, c'est-à-dire, selon les cas, en absence de réception du code standard ou de la réponse attendue pendant l'intervalle de temps spécifique, la personnalisation de l'entité 100 est interrompue et un message d'interruption de personnalisation est transmis, par la station de personnalisation 240 au serveur 200.

En l'absence de problème, chaque réponse est placée dans une mémoire tampon (en anglais « buffer »), dans l'ordre chronologique avec d'autres informations de compte-rendu de déroulement de la personnalisation (par exemple date, heure, identifiant de l'entité 100).

Lorsque la station de personnalisation 240 a reçu de l'entité électronique portable toutes les réponses associées aux instructions de personnalisation (ou qu'une durée prédéterminée s'est écoulée sans réception d'une réponse attendue, signe d'une anomalie), la station 240 émet, à destination du serveur 200, un message de compte-rendu, par exemple comportant le contenu d'une mémoire tampon contenant les réponses en question.

A réception de chaque message de compte-rendu, le serveur 200 analyse le compte-rendu, à l'étape 335 et détermine s'il doit déclencher une action en fonction du résultat de cette analyse. Le serveur détermine, notamment, si une erreur a été détectée au cours de l'étape 340. Si oui, au cours d'une étape 345, l'erreur est traitée. Par exemple, un message d'éjection de l'entité 100 vers un rebus est transmis à la station de personnalisation 240. Sinon, au cours d'une étape 350, le serveur de personnalisation détermine si la personnalisation de l'entité électronique portable 100 est terminée. Si oui, au cours d'une étape 360, on charge une nouvelle entité électronique portable dans le lecteur 280 et on retourne à l'étape 310. Sinon, au cours d'une étape 355, en fonction de l'identifiant de l'entité électronique portable, du ou des compte(s)-rendu reçu(s) et des données de personnalisation reçues par ailleurs, le serveur de personnalisation 200 génèrent un nouveau groupe d'instructions de personnalisation et les transmet à la station de personnalisation 240, préférentiellement sous forme cryptée, codée ou chiffrée.

Préférentiellement, au cours de cette étape 355, le serveur de personnalisation 200 définit le nouveau groupe d'instructions de personnalisation pour que ce groupe d'instructions ne s'achève que lorsque, pour l'instruction suivante, le serveur 200 ait besoin du compte-rendu d'exécution d'au moins une des instructions précédentes.

Puis on retourne à l'étape 325.

La figure 4 illustre des étapes 400 et 405 effectuées préliminairement à l'étape 300 et des étapes 410 à 435 effectuées au cours de l'étape 320. Comme illustré en figure 4, au cours d'une étape 400, on définit des profils de personnalisation, ensemble de données associées à un type d'entité électronique portable et qui définissent les caractéristiques générales de la personnalisation des entités de ce type, telles que la structure des données (y compris éventuellement de programme applicatif) et les données communes à inscrire dans des mémoires d'entités électroniques, ou encore des données de personnalisation physique (caractères à embosser, codage de la bande magnétique, etc.) ou graphique (logo à imprimer sur la surface de la carte, par exemple).

Par exemple, les profils comportent une longueur maximale du nom du porteur, des préférences linguistiques, des identifications de réseaux autorisés et/ou de réseaux interdits, une durée de validité et des choix techniques du distributeur d'entités.

La suite de la description de la figure 4 concerne les entités électroniques portables conformes à la norme ISO 7816.

La définition d'un profil de personnalisation respecte un ensemble de critères liés à la structure et à l'utilisation future de l'entité électronique, à savoir par exemple les normes (par exemple, GSM en téléphonique ou EMV dans le domaine bancaire) et applications (par exemple, VISA, MASTERCARD, marques déposées) existantes, et l'organisation interne (matérielle) de l'entité électronique.

Préférentiellement, au cours de l'étape 400, pour chaque profil, on effectue les étapes suivantes :
- choix d'au moins une application dans une liste prédéfinie d'applications ;
- configuration de paramètres associés à chaque application choisie ;
- sélection d'une plateforme matérielle, c'est-à-dire un type d'entité électronique portable, parmi une liste de plateformes compatibles déterminée en fonction des applications choisies et des paramètres configurés ;
- obtention du profil de personnalisation en fonction des applications choisies, des paramètres configurés et de la plateforme sélectionnée.

On simplifie ainsi la génération des données de profil de personnalisation. En effet, le choix de l'application permet de limiter considérablement les solutions possibles pour les autres données de personnalisation, ce qui simplifie la génération de données de profil de configuration et rend aisée sa mise en oeuvre sous forme interactive, par exemple au moyen d'un système informatique.

On obtient également une approche plus fonctionnelle qui permet de se concentrer sur les choix du client de la prestation de personnalisation, c'est-à-dire du distributeur d'entités électroniques portables, par exemple une banque, un opérateur de téléphonie ou une administration, en limitant au minimum les connaissances techniques (notamment dans le domaine de la carte à microcircuit) nécessaires à la génération du profil de personnalisation. Enfin, on assure la cohérence de l'ensemble des éléments entrant en ligne de compte pour la définition du profil puisque la compatibilité des applications, de leur configuration et de la plateforme utilisée découle de la solution proposée.

L'étape 400 débute par le choix d'au moins une application que les entités électroniques portables à personnaliser devront pouvoir mettre en oeuvre. Le choix de chaque application s'effectue dans une liste prédéfinie, par exemple présentée à l'utilisateur du système sous forme interactive, au moyen d'un menu déroulant.

On vérifie alors la cohérence des applications choisies. Lorsque les applications choisies ne génèrent pas d'incohérence, on configure des paramètres relatifs à chacune des applications choisies. Par exemple, on configure le répertoire téléphonique (en anglais *"Phonebook"*) d'un téléphone mobile en entrant les paramètres du répertoire tels que définis dans la norme de téléphonie mobile correspondante. On définit ainsi, par exemple, un nombre maximal d'entrées dans le répertoire téléphonique (en anglais *"max number of entries"*) égal à 250, une longueur maximale des noms (en anglais *"max length of name"*) égale à 16 octets. Cette configuration permet donc de définir notamment la taille des fichiers pour la mémorisation du répertoire téléphonique dans la mémoire réinscriptible de l'entité électronique portable. Des configurations par défaut peuvent également être définies pour chaque application. L'étape de configuration comprend également une étape de vérification de la cohérence des informations saisies ou sélectionnées, notamment afin d'assurer la conformité aux normes correspondantes.

Dans un autre exemple adapté au domaine des cartes bancaires, on détermine la langue préférée du futur porteur de la carte en la sélectionnant dans une liste de langues possibles.

Les choix d'applications et de configuration de celles-ci peuvent alors être mémorisés, par exemple sous forme d'une base de données, qui donne, par conséquent, une description fonctionnelle du profil de personnalisation, indépendamment de la plateforme matérielle (c'est-à-dire des composants et système d'exploitation) de l'entité électronique portable. Une telle base de données peut ainsi être réutilisée pour l'introduction de fonctionnalités identiques sur une autre plateforme matérielle. La base de données utilise par exemple une structure de type objet au sein duquel chaque choix de l'utilisateur est mémorisé comme une instance d'un objet d'une des classes prédéfinies.

Grâce, notamment, au mécanisme d'héritage, on évite de dupliquer des codes inutiles, en définissant des classes générales qui décrivent un profil de configuration et des fonctionnalités communes à de nombreuses applications, et en définissant des classes qui décrivent des fonctionnalités spécifiques à une application donnée héritant des attributs de classes plus générales.

Une fois la définition fonctionnelle déterminée, on sélectionne la plateforme à laquelle est destinée la personnalisation, dans une liste de plateformes compatibles avec la définition fonctionnelle définie aux étapes précédentes (par exemple du fait d'une capacité mémoire suffisante et d'une capacité à mettre en oeuvre une application particulière, telle que JavaCard).

Les plateformes sont par exemple définies par l'association d'un composant (en général circuit intégré de l'entité à personnaliser) et d'un système d'exploitation (généralement dénommé *"masque"* dans le domaine des cartes à microcircuit).

On peut prévoir d'afficher, en association avec chaque plateforme compatible, des informations permettant de faciliter le choix d'une plateforme, telles que par exemple, des informations de coût, de fiabilité d'approvisionnement, des références d'utilisation précédente.

Une fois le choix de la plateforme validé, on génère, sur la base des éléments donnés précédemment, l'image mémoire de la carte (en anglais "*IC card Image"*)*,* qui définit les données de la mémoire EEPROM, en dehors des éléments propres au futur porteur de l'entité, par exemple sous la forme d'un objet. Cette image représente, notamment, la structure de fichier de la mémoire EEPROM (conforme à la norme ISO7816), ainsi que le contenu et la taille des fichiers qui ont été déterminés lors de la génération du profil de personnalisation. En plus de la description des fichiers et de leur structure, l'image mémoire contient toutes les autres informations définissant la mémoire EEPROM de l'entité électronique portable telles que les zones mémoires contenant des variables, ainsi que leur valeur, en dehors des données spécifiques au futur porteur.

Ces variables sont, par exemple, mémorisées sous forme TLV (acronyme de *"Tag Length Value"*), c'est-à-dire successivement identifiant, longueur, valeur. Les étapes de configuration précitées peuvent en effet engendrer des données sous cette forme, la valeur étant fixée à cette étape ou à définir ultérieurement selon qu'elle est commune ou non à l'ensemble des futurs porteurs d'entités électroniques portables.

La structure de deux images peut ainsi être différente bien que les services rendus par les entités qui les mettent en oeuvre soient identiques. Les données pour lesquelles la valeur est inconnue sont positionnées, sans valeur, dans ces images de circuit intégré.

Eventuellement, on réalise une carte de test avec un lecteur de bureau puis on effectue la pré-personnalisation évoquée ci-dessus et, enfin, la personnalisation en mettant en oeuvre le procédé et/ou le dispositif objet de la présente invention, en complétant, pour chaque entité, les valeurs des champs ou données encore vierges.

Préférentiellement, chaque groupe de données de personnalisation est associé à un identifiant dit « second », le terme de « premier identifiant » étant réservé, dans toute la description, à un identifiant d'entité électronique portable généré à partir de données conservées dans la mémoire non réinscriptible ROM 130 d'une telle entité. L'identifiant second est typiquement la chaîne de caractères utilisé pour désigner la plateforme.

Les groupes de données comportent, préférentiellement, des instructions de personnalisation, personnalisation pouvant concerner, outre le contenu des mémoires de l'entité électronique portable 100, son apparence physique, comme, par exemple, son embossage ou l'impression de sa surface, ou encore l'enregistrement sur une bande magnétique. En ce qui concerne la personnalisation du contenu de la mémoire EEPROM, on parcourt des profils de personnalisation (groupes de données de personnalisation formant l'ensemble des données de personnalisation communes à toutes les entités électroniques portables du même type, défini par un masque ou un masque et un circuit intégré) pour former et mémoriser ces instructions. Ces instructions sont, dans un mode de réalisation, des commandes au format APDU. On peut, par exemple, former toutes les commandes au format APDU pour la création de la structure de fichier de la mémoire d'une carte à puce. On peut, en fait, engendrer toutes les commandes d'initialisation qu'on appelle aussi « commande de pré-personnalisation ». Le lecteur pourra se reporter au brevet US 6,196,459 pour le détail de cette pré-personnalisation.

Dans des modes de fonctionnement, les moyens de personnalisation engendrent les instructions de personnalisation à partir des données contenues dans le groupe de données de personnalisation sélectionné. Par exemple, si, lors du parcours d'un groupe de données de personnalisation, on rencontre un mot clé définissant un fichier, on forme l'instruction de fichier correspondante. Dans des modes de fonctionnement, on intègre des commandes APDU dans l'image. Dans des modes de fonctionnement, on prépare le corps des commandes au format APDU comportant une partie variable qui est complétée par des données de personnalisation. On intègre ainsi, dans le groupe de données de personnalisation, les corps de commandes APDU qui seront complétés par les données propres à chaque porteur au moment de la personnalisation.

Comme exposé ci-dessus, dans des modes de réalisation particuliers, les groupes de données de personnalisation comportent au moins une image de la structure d'au moins une partie de la mémoire de l'entité électronique portable.

Ainsi, au cours de l'étape 400, en figure 4, on produit une image de la mémoire de la carte (essentiellement la structure de fichier et les variables sous forme TLV), à partir de la sélection d'une application et on produit préférentiellement les instructions de personnalisation à partir de cette image, ce qui permet de s'adapter à la plateforme, à la machine, et donc d'améliorer la flexibilité de la personnalisation. Eventuellement, les instructions de personnalisation sont dans l'image.

Au cours d'une étape 405, le serveur de personnalisation 200 reçoit et mémorise une pluralité de groupes de données de personnalisation.

Au moment de la préparation de l'initialisation du lot, étape 410, on associe au lot d'entités électroniques portables à personnaliser, une pluralité de groupes de données de personnalisation, dans la mémoire du serveur de personnalisation 200.

On note que, dans des modes de réalisation, les étapes 400 et 405 sont effectuées sur un autre ordinateur, par exemple portable, les profils ou groupes de données de personnalisation étant ensuite chargées dans le serveur 200.

On observe qu'à ce stade, les groupes de données ne possèdent pas encore les valeurs spécifiques aux futurs porteurs d'entités.

Au cours de l'étape 320, on effectue, d'abord, une étape 410, au cours de laquelle on utilise le profil de personnalisation, formé par exemple de l'image mémoire et éventuellement d'autres paramètres liés par exemple à l'aspect physique de l'entité électronique portable, pour la personnalisation de chaque entité du lot, en intégrant dans l'image mémoire précédemment définie, les données propres à chaque futur porteur.

Le serveur 200 choisit alors, parmi les images de circuit intégré, celle qui correspond à chaque entité électronique portable du lot. Ensuite les commandes au format APDU sont préparées comme décrit ci-dessus. Au cours d'une étape 415 correspondant à l'étape 310 de la figure 3, la station de personnalisation 240 met sous tension ou remet à zéro l'entité électronique portable 100 et obtient, en réponse, de l'entité 100, des données dites « ATR » (acronyme de « answer to reset » pour réponse à la mise sous tension). On rappelle que le programme de calcul de l'ATR fait partie du masque (ou système d'exploitation) qui est mémorisé dans la mémoire morte ROM 130 de la l'entité électronique portable 100. Ce programme de calcul peut utiliser des informations de la mémoire réinscriptible non volatile EEPROM 120 et de la mémoire morte ROM 130.

En variante ne faisant pas partie de l'invention, la station de personnalisation 240 émet une requête de premier identifiant à destination de l'entité électronique portable 100 et reçoit, en retour, le premier identifiant.

Au cours d'une étape 420 correspondant à l'étape 315 de la figure 3, la station de personnalisation 240 transmet le premier identifiant de l'entité électronique portable 100 au serveur de personnalisation 200. Ce premier identifiant est, éventuellement, complété par un identifiant de la station de personnalisation afin que le serveur de personnalisation puisse adresser des messages spécifiques à cette station.

Au cours d'une étape 425, le serveur de personnalisation 200 associe le premier identifiant, de l'entité électronique portable, à au moins un second identifiant, de groupe de données de personnalisation, par exemple en mettant en oeuvre une table de correspondance.

Ces groupes de données sont mémorisés, dans le serveur 200, en association avec les seconds identifiants, les octets historiques correspondant respectivement aux masques, aux masques associés à des circuits et/ou aux circuits des entités électroniques portables 100.

Lorsqu'on obtient lesdits octets historiques de l'entité électronique portable que l'on va personnaliser, on les compare avec ceux associés aux groupes de données de personnalisation et on choisit chaque groupe de données pour lequel la comparaison est positive (cela peut être l'égalité, l'inclusion, ...).

Au cours d'une étape 430, on effectue la création, ou formation, de groupes d'instructions de personnalisation à partir des données ou profils de personnalisation, qui comportent, éventuellement, des commandes APDU et des corps de commandes APDU. Si les commandes APDU sont, au moins en partie, engendrées durant l'étape 400, au cours de l'étape 430, on complète celles qui doivent être complétées par des données spécifiques aux futurs porteurs des entités électroniques portables.

Au cours d'une étape 435, le serveur de personnalisation 200 effectue le décodage et/ou l'analyse nécessaire, et transmet chaque commande au format APDU du groupe d'instructions à la station de personnalisation.

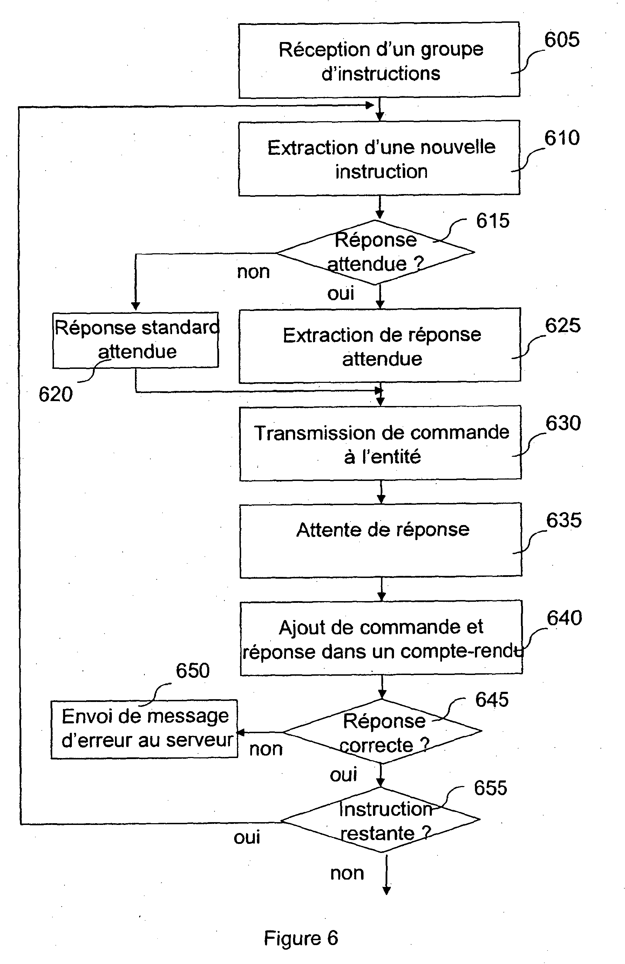

La figure 6 illustre, en détail, l'étape 325. Tout d'abord, au cours d'une étape 605, la station de personnalisation 240 reçoit un groupe d'instructions de personnalisation de la part du serveur 200. Puis, au cours d'une étape 610, la station de personnalisation 240 effectue une extraction de la prochaine instruction du dernier groupe d'instructions de personnalisation reçu. Lors de la première itération de l'étape 610, la prochaine instruction est la première instruction.

Au cours d'une étape 615, la station de personnalisation 240 détermine si l'instruction extraite est associée à une instruction de contrôle, c'est-à-dire, ici, identifie une réponse à attendre de l'entité électronique portable.

Si oui, au cours d'une étape 625, la station de personnalisation 240 extrait, du groupe d'instructions de personnalisation, l'identification de la réponse à attendre. Sinon, au cours d'une étape 620, la station de personnalisation 240 mémorise, comme réponse attendue, une réponse standard, indépendante de l'instruction de personnalisation.

A la suite de l'une des étapes 620 ou 625, la station de personnalisation extrait la commande au format APDU de l'instruction extraite et la transmet à l'entité électronique portable 100, au cours d'une étape 630. Par exemple, cette instruction permet l'inscription, par l'entité électronique portable 100, de données dans la mémoire non volatile EEPROM 140 de l'entité électronique portable 100.

Puis, au cours d'une étape 635, la station de personnalisation 240 attend une réponse de l'entité 100. Lors de la réception d'une réponse de la part de l'entité 100 ou à la fin de la durée maximale d'attente, la station de personnalisation inscrit le contenu de la commande et de la réponse, éventuellement vide, dans une mémoire tampon de compte-rendu, de manière chronologique au cours d'une étape 640.

Au cours d'une étape 645, la station de personnalisation 240 détermine si la réponse obtenue est identique à la réponse attendue. Si non, au cours d'une étape 650, la station 240 envoie un message d'erreur au serveur 200 ainsi que le contenu de la mémoire tampon de compte-rendu. Si oui, au cours d'une étape 655, la station de personnalisation 240 détermine si le dernier groupe d'instructions reçu comporte encore au moins une instruction. Si non, l'étape 325 est achevée. Si oui, on retourne à l'étape 610.

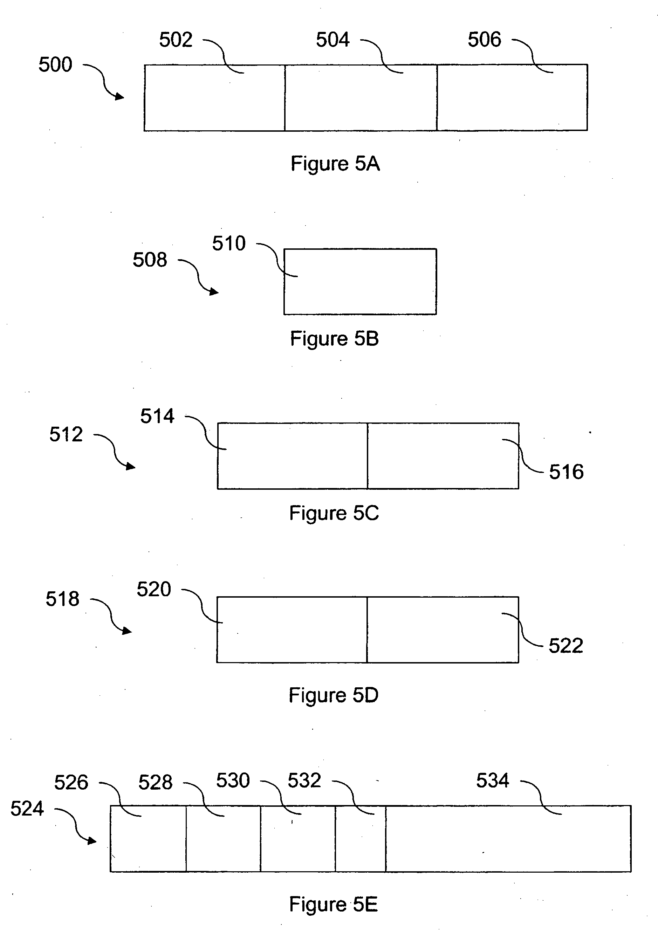

On observe, en figure 5A, qu'une requête 500 d'initialisation de personnalisation, envoyée par la station 240 au serveur 200, peut comporter un code d'initialisation 502, par exemple sur 2 octets, un numéro de lot 504, par exemple sur 2 octets, et un numéro de station 506, par exemple sur 2 octets.

La requête d'initialisation est envoyée une seule fois par lot comme indiqué en regard de l'étape 300, en figure 3.

Un exemple de réponse 508 du serveur 200 est donné en figure 5B. Il comporte un code d'accusé de réception 510. Un autre exemple de réponse 512 est donné en figure 5C. Il comporte un code de défaut de réception 514 et un numéro d'erreur 516.

Lorsque le lot est terminé (la détection de la fin du lot est généralement réalisée par un capteur de la station 240, ou par un décompte des entités électroniques portables), la station 240 envoie un message de fin de personnalisation au serveur. Ce message 518, illustré en figure 5D, comporte un code de fin de lot 520 et peut comporter des informations d'identification du lot et/ou de la machine de personnalisation 522.

Une fois que l'accusé de réception à la commande d'initialisation de la personnalisation reçue, sur détection d'une nouvelle entité 100 dans le lecteur 280, la station 240 communique au serveur 200, en une seule commande, l'identifiant, par exemple l'ATR (acronyme de « answer to reset » pour réponse à initialisation), de l'entité 100 et une requête de groupe d'instructions de personnalisation. Un exemple d'une telle commande 524 est illustré en figure 5E. Cette commande 524 comporte un code de communication ATR 526, un numéro de lot 528, un identifiant de station de personnalisation 530, par exemple un numéro de station de personnalisation, une donnée de longueur d'identifiant ATR 532 et l'identifiant ATR 534, de longueur variable.

On rappelle que l'ATR, dont le contenu est défini par la norme ISO 7816, est la première réponse d'une carte après remise à zéro (typiquement à la mise sous tension). L'ATR peut contenir, dans des octets dit historiques, des informations sur la plateforme (circuit et masque ou circuit ou masque) communiquées au lecteur 280. Ce sont notamment ces informations qui sont utilisées par le serveur 200 pour former les groupes d'instructions de personnalisation.

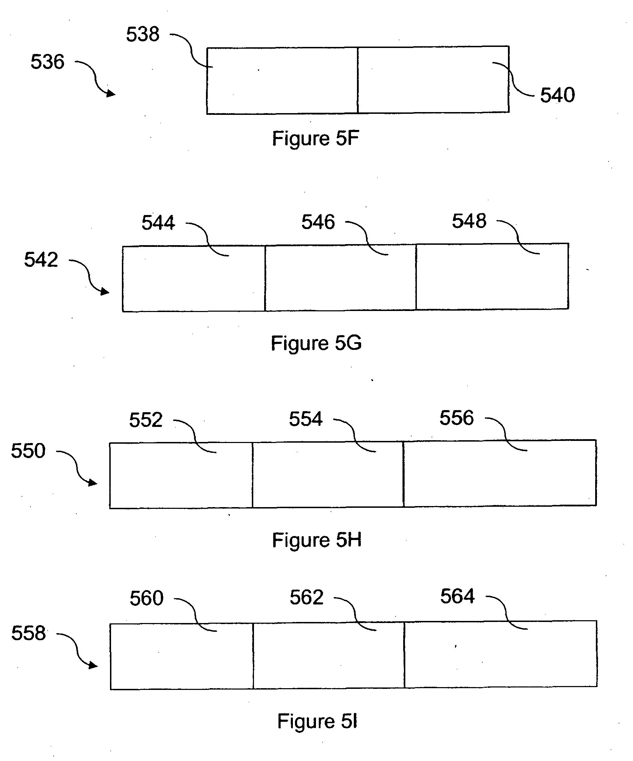

Un exemple de réponse 536 du serveur 200 est illustré en figure 5F. Cette réponse 536 comporte un en-tête de groupe d'instructions de personnalisation 538 et un groupe d'instructions de personnalisation 540, de longueur variable.

Dans un autre mode de réalisation, l'étape de communication de l'identifiant ATR est remplacée par une simple requête de groupe d'instructions de personnalisation envoyée par la station 240 au serveur 200, sur détection d'une nouvelle entité 100, ou, plus généralement, au moment du lancement d'un nouveau lot d'entités 100. Un exemple d'une telle requête 542 est illustré en figure 5G et comporte un code de requête 544, un code de lot 546 et un numéro de station 548.

Dans ce mode de réalisation, le premier groupe d'instructions 550, envoyé par le serveur 200 à la station de personnalisation 240, comporte une commande de mise sous tension de l'entité électronique portable 100. Un exemple de premier groupe d'instructions 550 est illustré en figure 5H. Il comporte un numéro d'instruction 552, un type d'instruction 554 à l'attention de la station de personnalisation 240 et un code d'instruction de mise sous tension 556.

La station de personnalisation 240 récupère et insère ensuite l'identifiant ATR de l'entité électronique portable dans un compte-rendu 558, dont un exemple est illustré en figure 5I. Il comporte un numéro de compte-rendu 560, une longueur d'identifiant ATR 562 et un identifiant ATR 564, de longueur variable.

Le serveur 200 définit ensuite chaque groupe d'instructions de personnalisation pour qu'un groupe d'instructions ne s'achève que lorsque, pour l'instruction suivante, le serveur ait besoin du compte-rendu d'exécution d'au moins une des instructions précédentes.

Par exemple, la première instruction du nouveau groupe d'instructions est une instruction intervenant dans un processus cryptographique. Par exemple, la dernière instruction du groupe d'instructions précédent peut être une commande au format APDU dénommée « get challenge » selon la norme ISO 7816, qui permet d'obtenir de la carte un « challenge », c'est à dire un nombre aléatoire, pour permettre au serveur 200 de s'authentifier en calculant un code d'authentification calculé en cryptant le « challenge » à partir d'une clef, par le biais d'un module sécurisé externe matériel appelé HSM (acronyme de « Hardware Security Module », et en envoyant ce code d'authentification, par une commande au format APDU dénommée « external authenticate » (pour authentification externe) selon la norme ISO 7816, à l'entité électronique portable 100, qui le compare alors avec le code d'authentification qu'elle a elle même calculé à partir de la même clef, du challenge, et en utilisant des moyens cryptographiques qui lui sont propres, et qui accepte l'authentification dans le cas où les deux codes sont égaux.

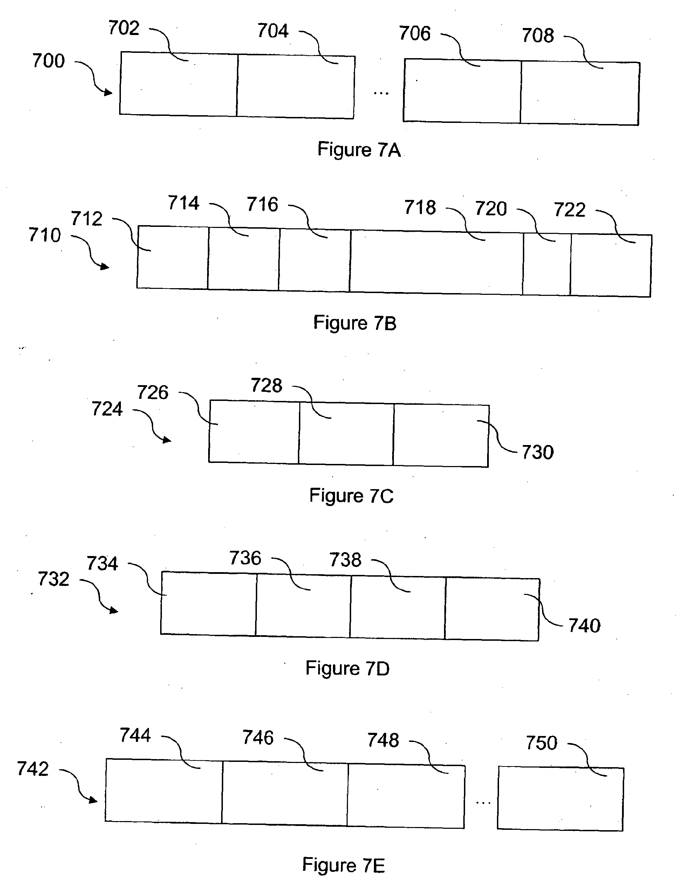

On illustre, en figures 7A, des détails d'un groupe d'instructions de personnalisation 700. Il comporte une première instruction 702, une deuxième instruction 704, et ainsi de suite jusqu'aux dernières instructions 706 et 708, chaque instruction ayant une longueur variable.

On observe, en figure 7B, qu'une instruction 710 à destination de l'entité électronique portable 100 comporte un numéro d'instruction 712 et un type d'instruction 714 qui indique si une réponse attendue est spécifiée. L'instruction 710 comporte aussi une longueur d'instruction 716, une commande au format APDU 718, une longueur de réponse attendue 720 et, optionnellement, en fonction du type d'instruction, un contenu de réponse attendu 722.

Deux types d'instructions de contrôle à destination de la station de personnalisation 240 sont représentés en figures 7C et 7D. Le type d'instruction de contrôle 724 comporte un numéro d'instruction 726, un type d'instruction 728 et un code d'instruction 730. Le type d'instruction de contrôle 732 comporte un numéro d'instruction 734, un type d'instruction 736, un code d'instruction 738 et des données 740. Les types d'instruction 728 et 736 indiquent que l'instruction est à destination de la station 240. Les codes instruction 730 et 738 indiquent, par exemple, s'il s'agit d'une instruction de mise sous tension, d'une instruction de mise hors tension, d'une instruction de modification de l'horloge ou d'une instruction de sélection de protocole. Les données 740 indiquent, par exemple, une fréquence d'horloge ou une tension à fournir à l'entité 100. Dans ces derniers cas, les instructions de compte-rendu sont implicites.

La figure 7E illustre un exemple de compte-rendu 742 émis par la station de personnalisation 240 à destination du serveur 200. Ce compte-rendu 742 comporte un code de compte-rendu 744, une première information de compte-rendu 746, une deuxième information de compte-rendu 748 et ainsi de suite jusqu'à une dernière information de compte-rendu 750, chacune des informations de compte-rendu ayant une longueur variable.

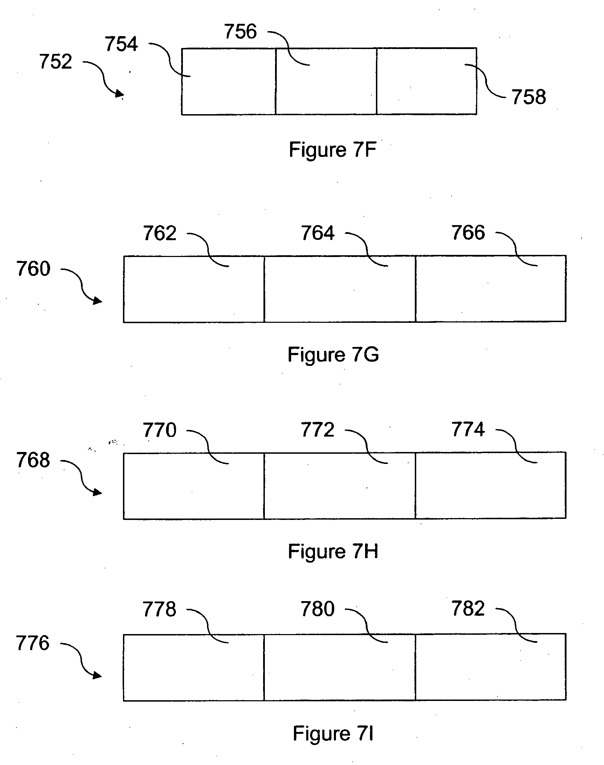

Un exemple d'information de compte-rendu 752 est donné en figure 7F. Cette instruction de compte-rendu 752 comporte un numéro d'instruction 754, une longueur de réponse 756 et une réponse 758 de longueur variable.

Sur réception du compte-rendu, le serveur 200 analyse ledit compte-rendu, traite les anomalies éventuelles (par exemple, en arrêtant la personnalisation) et envoie un nouveau groupe d'instructions de personnalisation à la station de personnalisation 240 afin de poursuivre le déroulement de la personnalisation. Lorsque la personnalisation d'une entité électronique portable est terminée, le serveur 200 envoie une instruction spécifique à la station de personnalisation 240. La station de personnalisation 240 peut alors décharger automatiquement l'entité électronique portable 100 du lecteur 280 afin que la station 240 poursuive le processus de personnalisation, par exemple, par une étape d'embossage sur la même station ou sur une station différente, et charger automatiquement une nouvelle entité 100 dans le lecteur 280 afin d'initier la personnalisation électrique de cette entité 100.

Un exemple d'instruction spécifique de fin de personnalisation 760 est illustré en figure 7G. Dans des modes de réalisation, l'instruction spécifique représentative de fin de personnalisation est la seule instruction de personnalisation d'un groupe d'instructions de personnalisation. Cette disposition est avantageuse en ce qu'elle permet au serveur d'analyser tous les comptes-rendus concernant une entité électronique portable avant de transmettre l'instruction représentative de fin de personnalisation. Cette instruction spécifique 760 comporte un numéro d'instruction 762, un type d'instruction 764 qui précise que cette instruction est à destination de la station 240 et un code d'instruction de fin de personnalisation sans anomalie 766.

Lorsque la personnalisation est terminée, mais comporte des anomalies, le serveur 200 envoie une instruction spécifique 768 pour informer la station de personnalisation 240, et donc l'opérateur de cette station de personnalisation 240. Un exemple d'une telle instruction spécifique 768 est illustré en figure 7H et comporte un numéro d'instruction 770, un type d'instruction 772 qui précise que cette instruction est destinée à la station de personnalisation 240 et un code d'instruction de fin de personnalisation avec anomalie 774.

L'instruction de fin de personnalisation, avec ou sans anomalie, peut se trouver à la fin d'un groupe d'instructions de personnalisation. Préférentiellement, cette instruction est placée dans un groupe sans aucune autre instruction. On peut prévoir également un message analogue envoyé par le serveur 200 pour signaler la fin de personnalisation d'un lot d'entités électroniques portables 100.

Préférentiellement, la station de personnalisation 240 comporte des moyens de transmission, au serveur 200, d'un message d'anomalie et, en cas de détection d'anomalie, le serveur de personnalisation 200 arrête la personnalisation (qui peut ainsi être reprise par la suite...). Un exemple d'instruction d'anomalie de station 776 est illustré en figure 7I. Cette instruction 776 comporte un code d'instruction d'anomalie 778, un numéro de station 780 et un code d'anomalie 782.

Bien sûr, les données échangées entre le serveur 200 et la station 240 peuvent être codées selon un protocole ou algorithme cryptographique quelconque.

De nombreuses variantes ou améliorations peuvent être envisagées pour le système de personnalisation. Par exemple :
- on peut prévoir de faire réaliser des instructions de contrôle plus complexes à la station de personnalisation. Ainsi, celle-ci peut-être éventuellement être directement reliée à un HSM, et une instruction de contrôle peut consister à échanger des informations avec ce HSM pour effectuer une authentification telle que décrit plus haut.
- on peut également prévoir des instructions de compte-rendu plus complexes, par exemple permettant de ne mettre qu'une partie des réponses de l'entité électronique dans le compte-rendu, ou d'insérer le résultat d'un traitement, par exemple en partie arithmétique, réalisé par la station à partir des réponses de l'entité électronique.
- afin d'améliorer la cadence de personnalisation, les instructions de contrôles réalisés par la station de personnalisation peuvent être exécutées en parallèle des échanges avec l'entité électronique portable. Ainsi, en attendant la réponse de l'entité électronique à une instruction de personnalisation, la station de personnalisation peut analyser la réponse de l'instruction de personnalisation précédente et insérer les informations nécessaires dans ledit compte-rendu.
- afin également d'améliorer la cadence de personnalisation, la préparation des groupes d'instruction par le serveur peut être réalisée en parallèle avec l'exécution des groupes d'instructions par la station de personnalisation. En effet, une partie des instructions d'un nouveau groupe d'instructions est indépendante du compte-rendu du groupe d'instructions précédent. Le serveur peut ainsi préparer cette partie des instructions d'un nouveau groupe d'instructions pendant l'exécution du groupe d'instructions précédent par la station de personnalisation.

## Revendications

1. Dispositif de personnalisation d'une entité électronique portable (100) comportant :
- des moyens (200, 270, 405) de mémorisation d'une pluralité de groupes de données de personnalisation (275),
- des moyens (200, 255, 260, 280) de communication avec une mémoire non réinscriptible de ladite entité électronique portable, adaptés à recevoir (315, 415, 420) un premier identifiant conservé dans ladite mémoire non réinscriptible,
- des moyens (200, 260, 320, 420, 425) de sélection d'au moins un groupe de données de personnalisation en fonction du premier identifiant et
- des moyens (255, 260, 280, 325) de personnalisation de ladite entité électronique portable à partir de chaque groupe de données de personnalisation sélectionné.
**caractérisé en ce que** ledit premier identifiant est au moins une partie d'un message fourni par l'entité électronique portable lors de sa mise sous tension.

2. Dispositif selon la revendication 1, **caractérisé en ce que** les moyens de mémorisation d'une pluralité de groupes de données de personnalisation sont adaptés à ce que chaque groupe de données de personnalisation soit associé à un second identifiant, **en ce qu'**il comporte des moyens d'association d'un second identifiant audit premier identifiant, et **en ce que** les moyens de sélection sont adaptés à sélectionner (425) au moins un groupe de données de personnalisation en fonction du second identifiant correspondant au premier identifiant.

3. Dispositif selon l'une quelconque des revendications 1 ou 2, **caractérisé en ce que** :
- les moyens (200, 255, 260, 280) de communication sont adaptés à ce que ladite entité électronique (100) soit conforme au moins en partie à la norme ISO7816 et à ce que ledit message soit un ATR (acronyme de « Answer to Reset » pour réponse à la mise sous tension) et
- les moyens de communication sont adaptés à effectuer une remise à zéro de l'entité électronique portable et à recevoir le premier identifiant dans au moins une partie d'un message fourni par l'entité électronique portable lors de sa remise à zéro.

4. Dispositif selon l'une quelconque des revendications 1 à 3, **caractérisé en ce que** les moyens (200, 255, 260, 280) de communication sont adaptés à recevoir un premier identifiant qui comporte au moins un octet dit « historiques » selon la norme ISO7816 (octets T1, T2, ...T9) de l'ATR.

5. Dispositif selon l'une quelconque des revendications 1 à 4, **caractérisé en ce que** :
- les moyens (200, 270, 405) de mémorisation sont adaptés à ce que lesdits groupes de données de personnalisation comportent au moins une image (400) de la structure de la mémoire non volatile de l'entité électronique portable, représentative du contenu et de la taille de fichier de l'entité électronique portable et des zones mémoires de l'entité électronique portable contenant des variables, ainsi que leur valeur, en dehors des données spécifiques au futur porteur de l'entité électronique portable et
- les moyens (255, 260, 280, 325) de personnalisation sont adaptés à compléter les champs vierges de ladite image de structure avec des données de personnalisation.

6. Dispositif selon l'une quelconque des revendications 1 à 5, **caractérisé en ce que** l'entité électronique (100) est une carte à microcontrôleur sécurisé conforme au moins en partie à la norme ISO7816.

7. Dispositif selon l'une quelconque des revendications 1 à 6, **caractérisé en ce qu'**il comporte :
- des moyens de traitement (200, 230) adaptés à traiter lesdites données de personnalisation et à engendrer au moins un groupe d'instructions de personnalisation de l'entité électronique portable, au moins un groupe d'instructions de personnalisation comportant au moins une instruction de contrôle de personnalisation permettant à une station de personnalisation (240) de contrôler la bonne exécution d'au moins une instruction de personnalisation, au moins une instruction de personnalisation d'un groupe d'instructions de personnalisation permettant l'inscription, par l'entité électronique portable, de données dans la mémoire de l'entité électronique portable et
- des moyens d'émission de chaque groupe d'instructions de personnalisation.

8. Dispositif selon la revendication 7, **caractérisé en ce que** les moyens de traitement (200, 230) sont, en outre, adaptés à engendrer au moins une instruction de compte-rendu de personnalisation permettant à la station de personnalisation (240) de confirmer au dispositif la bonne exécution d'au moins une partie d'un groupe d'instructions de personnalisation, et à insérer au moins une instruction de compte-rendu dans au moins un groupe d'instructions de personnalisation, les moyens d'émission étant adaptés à émettre au moins une instruction de compte-rendu à destination de la station de personnalisation, le dispositif comportant, en outre, des moyens de réception d'au moins un compte-rendu en provenance de la station de personnalisation.

9. Dispositif selon l'une quelconque des revendications 7 ou 8, **caractérisé en ce qu'**il comporte, en outre, des moyens d'analyse (200, 230) aptes à analyser au moins un compte-rendu reçu et à déclencher une action en fonction du résultat de ladite analyse.

10. Dispositif selon l'une quelconque des revendications 7 à 9, **caractérisé en ce que** les moyens (200, 230) de traitement comportent des moyens de définition de groupes d'instructions de personnalisation tels que le dispositif a besoin du compte-rendu d'exécution d'au moins une des précédentes instructions pour engendrer la première instruction du prochain groupe d'instructions de personnalisation.

11. Dispositif selon l'une quelconque des revendications 7 à 10, **caractérisé en ce que** les moyens (200) de communication sont adaptés à recevoir, en outre, au moins un identifiant de ladite station de personnalisation (240).

12. Dispositif selon l'une quelconque des revendications 7 à 11, **caractérisé en ce que** les moyens (200, 230) de traitement sont adaptés à engendrer au moins un groupe d'instructions de personnalisation en parallèle avec l'exécution d'un groupe d'instructions de personnalisation par la station de personnalisation (240).

13. Dispositif selon l'une quelconque des revendications 1 à 6, **caractérisé en ce qu'**il comporte :
- des moyens de réception (260) d'au moins un groupe d'instructions de personnalisation de l'entité électronique portable (100), au moins un groupe d'instructions comportant au moins une instruction de contrôle de personnalisation permettant de contrôler la bonne exécution d'au moins une instruction de personnalisation, au moins une instruction de personnalisation d'un groupe d'instructions de personnalisation permettant l'inscription, par l'entité électronique portable, de données dans la mémoire de l'entité électronique portable,
- des moyens (255, 260, 280) de transmission d'au moins une instruction de personnalisation à l'entité électronique portable et
- des moyens (260) de traitement adaptés à traiter chaque instruction de contrôle pour contrôler la bonne exécution d'au moins une instruction de personnalisation par l'entité électronique portable.

14. Dispositif selon la revendication 13, **caractérisé en ce que** les moyens (260) de traitement sont adaptés à réaliser au moins une instruction de contrôle d'au moins une instruction de personnalisation après que les moyens de transmission aient transmis, à l'entité électronique portable, une autre instruction de personnalisation non concernée par ladite instruction de contrôle.

15. Dispositif selon l'une quelconque des revendications 13 ou 14, **caractérisé en ce que** les moyens de réception (260) sont, en outre, adaptés à recevoir au moins une instruction de compte-rendu de personnalisation et les moyens de traitement (260) sont, en outre, adaptés à préparer un compte-rendu d'exécution d'au moins un groupe d'instructions de personnalisation, le dispositif comportant, en outre, des moyens d'émission de compte-rendu à destination d'un serveur (200) de personnalisation.

16. Dispositif selon l'une quelconque des revendications 13 à 15, **caractérisé en ce que** les moyens de réception sont adaptés à extraire au moins une instruction de compte-rendu d'au moins un groupe d'instructions de personnalisation.

17. Procédé de personnalisation d'une entité électronique portable comportant:
- une étape (405) de mémorisation, dans un dispositif de personnalisation, d'une pluralité de groupes de données de personnalisation,
- une étape (420) de communication avec une mémoire non réinscriptible de ladite entité électronique portable (100) pour recevoir un premier identifiant conservé dans ladite mémoire non réinscriptible,
- une étape (430) de sélection, par ledit dispositif de personnalisation, d'au moins un groupe de données de personnalisation en fonction du premier identifiant et
- une étape (435) de personnalisation de ladite entité électronique portable à partir de chaque groupe de données de personnalisation sélectionné,
**caractérisé en ce que** ledit premier identifiant est au moins une partie d'un message fourni par l'entité électronique portable lors de sa mise sous tension.

## Patentansprüche

1. Einrichtung zum Anpassen einer tragbaren elektronischen Entität (100), umfassend:
- Mittel (200, 270, 405) zum Speichern mehrerer Gruppen von Anpassungsdaten (275),
- Mittel (200, 255, 260, 280) zur Kommunikation mit einem nicht wiederbeschreibbaren Speicher der tragbaren elektronischen Entität, die angepasst sind, eine erste Kennung zu empfangen (315, 415, 420), die in dem nicht wiederbeschreibbaren Speicher aufbewahrt wird,
- Mittel (200, 260, 320, 420, 425) zur Auswahl von mindestens einer Gruppe von Anpassungsdaten in Abhängigkeit von der ersten Kennung, und
- Mittel (255, 260, 280, 325) zum Anpassen der tragbaren elektronischen Entität ausgehend von jeder ausgewählten Gruppe von Anpassungsdaten,
**dadurch gekennzeichnet, dass** die erste Kennung mindestens ein Teil einer Nachricht ist, die durch die tragbare elektronische Entität bei ihrer Unterspannungssetzung bereitgestellt wird.

2. Einrichtung nach Anspruch 1, **dadurch gekennzeichnet, dass** die Mittel zum Speichern mehrerer Gruppen von Anpassungsdaten derart angepasst sind, dass jede Gruppe von Anpassungsdaten einer zweiten Kennung zugehörig ist, dadurch, dass sie Mittel zur Verbindung einer zweiten Kennung mit der ersten Kennung umfasst, und dadurch, dass die Auswahlmittel angepasst sind, mindestens eine Gruppe von Anpassungsdaten in Abhängigkeit von der zweiten Kennung auszuwählen (425), die der ersten Kennung entspricht.

3. Einrichtung nach einem der Ansprüche 1 oder 2, **dadurch gekennzeichnet, dass**:
- die Kommunikationsmittel (200, 255, 260, 280) derart angepasst sind, dass die elektronische Entität (100) zumindest teilweise die Norm IS07816 erfüllt und dass die Nachricht eine ATR (Akronym für "Answer to Reset" - Antwort auf Unterspannungssetzung) ist, und
- die Kommunikationsmittel angepasst sind, eine Nullstellung der tragbaren elektronischen Entität durchzuführen und die erste Kennung in mindestens einem Teil einer Nachricht zu empfangen, die durch die tragbare elektronische Entität bei ihrer Nullstellung geliefert wird.

4. Einrichtung nach einem der Ansprüche 1 bis 3, **dadurch gekennzeichnet, dass** die Kommunikationsmittel (200, 255, 260, 280) angepasst sind, eine erste Kennung zu empfangen, die mindestens ein sogenanntes "Historical Byte" gemäß der Norm IS07816 (Bytes T1, T2, ...T9) der ATR enthält.

5. Einrichtung nach einem der Ansprüche 1 bis 4, **dadurch gekennzeichnet, dass**:
- die Mittel (200, 270, 405) zum Speichern derart angepasst sind, dass die Gruppen von Anpassungsdaten mindestens ein Abbild (400) der Struktur des nichtflüchtigen Speichers der tragbaren elektronischen Entität umfassen, das für den Inhalt und die Dateigröße der tragbaren elektronischen Entität und der Speicherbereiche der tragbaren elektronischen Entität charakteristisch ist, das neben Daten, die für den zukünftigen Träger der tragbaren elektronischen Entität spezifisch sind, Variablen sowie ihren Wert enthält, und
- wobei die Anpassungsmittel (255, 260, 280, 325) angepasst sind, die leeren Felder des Strukturbilds mit Anpassungsdaten zu füllen.

6. Einrichtung nach einem der Ansprüche 1 bis 5, **dadurch gekennzeichnet, dass** die elektronische Entität (100) eine Karte mit gesichertem Mikrocontroller ist, die zumindest teilweise die Norm IS07816 erfüllt.

7. Einrichtung nach einem der Ansprüche 1 bis 6, **dadurch gekennzeichnet, dass** sie umfasst:
- Verarbeitungsmittel (200, 230), die angepasst sind, die Anpassungsdaten zu verarbeiten und mindestens eine Gruppe von Befehlen zur Anpassung der tragbaren elektronischen Entität, mindestens eine Gruppe von Anpassungsbefehlen, die mindestens einen Anpassungssteuerbefehl umfasst, der es einer Anpassungsstation (240) ermöglicht, die ordnungsgemäße Ausführung von mindestens einem Anpassungsbefehl zu steuern, und mindestens einen Befehl zur Anpassung von einer Gruppe von Anpassungsbefehlen zu erzeugen, die die Eintragung von Daten durch die tragbare elektronische Entität in den Speicher der tragbaren elektronischen Entität ermöglichen, und
- Mittel zur Ausgabe von jeder Gruppe von Anpassungsbefehlen.

8. Einrichtung nach Anspruch 7, **dadurch gekennzeichnet, dass** die Verarbeitungsmittel (200, 230) überdies angepasst sind, mindestens einen Anpassungsberichtsbefehl zu erzeugen, der es der Anpassungsstation (240) ermöglicht, der Einrichtung die ordnungsgemäße Ausführung von mindestens einem Teil von einer Gruppe von Anpassungsbefehlen zu bestätigen, und mindestens einen Berichtsbefehl in mindestens eine Gruppe von Anpassungsbefehlen einzufügen, wobei die Ausgabemittel angepasst sind, mindestens einen Berichtsbefehl an die Anpassungsstation auszugeben, wobei die Einrichtung überdies Mittel zum Empfang von mindestens einem Bericht umfassen, der von der Anpassungsstation stammt.

9. Einrichtung nach einem der Ansprüche 7 oder 8, **dadurch gekennzeichnet, dass** sie überdies Analysemittel (200, 300) umfasst, die geeignet sind, mindestens einen empfangenen Bericht zu analysieren und in Abhängigkeit vom Ergebnis der Analyse einen Vorgang auszulösen.

10. Einrichtung nach einem der Ansprüche 7 bis 9, **dadurch gekennzeichnet, dass** die Verarbeitungsmittel (200, 230) Mittel zur Bestimmung von Anpassungsbefehlsgruppen umfassen, die derart sind, dass die Einrichtung den Ausführungsbericht von mindestens einem der vorhergehenden Befehle benötigt, um den ersten Befehl der nächsten Gruppe von Anpassungsbefehlen zu erzeugen.

11. Einrichtung nach einem der Ansprüche 7 bis 10, **dadurch gekennzeichnet, dass** die Kommunikationsmittel (200) angepasst sind, überdies mindestens eine Kennung der Anpassungsstation (240) zu empfangen.

12. Einrichtung nach einem der Ansprüche 7 bis 11, **dadurch gekennzeichnet, dass** die Verarbeitungsmittel (200, 230) angepasst sind, parallel zur Ausführung einer Gruppe von Anpassungsbefehlen durch die Anpassungsstation (240) mindestens eine Gruppe von Anpassungsbefehlen zu erzeugen.

13. Einrichtung nach einem der Ansprüche 1 bis 6, **dadurch gekennzeichnet, dass** sie umfasst:
- Mittel (260) zum Empfang von mindestens einer Befehlsgruppe zur Anpassung der tragbaren elektronischen Entität (100), wobei mindestens eine Gruppe von Befehlen, die mindestens einen Anpassungssteuerbefehl umfasst, das Steuern der ordnungsgemäßen Ausführung von mindestens einem Anpassungsbefehl ermöglicht, wobei mindestens ein Anpassungsbefehl von einer Gruppe von Anpassungsbefehlen die Eintragung von Daten durch die tragbare elektronische Entität in den Speicher der tragbaren elektronischen Entität ermöglicht,
- Mittel (255, 260, 280) zur Übertragung von mindestens einem Anpassungsbefehl an die tragbare elektronische Entität, und
- Verarbeitungsmittel (260), die angepasst sind, jeden Steuerbefehl zu verarbeiten, um die ordnungsgemäße Ausführung von mindestens einem Anpassungsbefehl durch die tragbare elektronische Entität zu steuern.

14. Einrichtung nach Anspruch 13, **dadurch gekennzeichnet, dass** die Verarbeitungsmittel (260) angepasst sind, mindestens einen Steuerbefehl von mindestens einem Anpassungsbefehl auszuführen, nachdem die Übertragungsmittel einen anderen Anpassungsbefehl, der nicht von dem Steuerbefehl betroffen ist, an die tragbare elektronische Entität übertragen haben.

15. Einrichtung nach einem der Ansprüche 13 oder 14, **dadurch gekennzeichnet, dass** die Empfangsmittel (260) überdies angepasst sind, mindestens einen Anpassungsberichtsbefehl zu empfangen, und die Verarbeitungsmittel (260) überdies angepasst sind, einen Ausführungsbericht von mindestens einer Gruppe von Anpassungsbefehlen vorzubereiten, wobei die Einrichtung überdies Mittel zum Übertragen des Berichts an einen Anpassungsserver (200) umfasst.

16. Einrichtung nach einem der Ansprüche 13 bis 15, **dadurch gekennzeichnet, dass** die Empfangsmittel angepasst sind, mindestens einen Berichtsbefehl von mindestens einer Gruppe von Anpassungsbefehlen auszulesen.

17. Verfahren zum Anpassen einer tragbaren elektronischen Entität, umfassend:
- einen Schritt (405) des Speicherns mehrerer Gruppen von Anpassungsdaten in einer Anpassungseinrichtung,
- einen Schritt (420) des Kommunizierens mit einem nicht wiederbeschreibbaren Speicher der tragbaren elektronischen Entität (100) zum Empfangen einer ersten Kennung, die in dem nicht wiederbeschreibbaren Speicher aufbewahrt wird,
- einen Schritt (430) des Auswählens von mindestens einer Gruppe von Anpassungsdaten in Abhängigkeit von der ersten Kennung durch die Anpassungseinrichtung, und
- einen Schritt (435) der Anpassung der tragbaren elektronischen Entität ausgehend von jeder ausgewählten Gruppe von Anpassungsdaten, **dadurch gekennzeichnet, dass** die erste Kennung mindestens ein Teil einer Nachricht ist, die durch die tragbare elektronische Entität bei ihrer Unterspannungssetzung geliefert wird.

## Claims

1. Device for customizing a portable electronic entity (100), which includes:
- means(200, 270, 405) of storing a plurality of groups of customization data (275),
- means (200, 255, 260, 280) of communicating with a non-rewritable memory of said portable electronic entity, for receiving (315, 415, 420) a first identifier retained in said non-rewritable memory,
- means (200, 260, 320, 420, 425) of selecting at least one group of customization data according to the first identifier, and
- means (255, 260, 280, 325) of customizing said portable electronic entity according to each selected group of customization data,
**characterized in that** said first identifier is at least a part of a message supplied by the portable electronic entity when it was powered up.

2. Device according to claim 1, **characterized in that** the means of storing a plurality of groups of customization data are designed so that each group of customization data is associated with a second identifier, **in that** it includes means of associating a second identifier with said first identifier, and **in that** the selection means are designed to select (425) at least one group of customization data according to the second identifier corresponding to the first identifier.

3. Device according to any one of claims 1 or 2, **characterized in that**:
- the communication means (200, 255, 260, 280) are designed so that said electronic entity (100) conforms at least partly to the ISO 7816 standard and so that said message is an ATR ("answer to reset"), and
- the communication means are designed to perform a reset of the portable electronic entity and to receive the first identifier in at least part of a message supplied by the portable electronic entity when it was reset.

4. Device according to any one of claims 1 to 3, **characterized in that** the communication means (200, 255, 260, 280) are designed to receive a first identifier that includes at least one "history" byte according to the ISO 7816 standard (bytes T1, T2, ... T9) of the ATR.

5. Device according to any one of claims 1 to 4, **characterized in that**:
- the storage means (200, 270, 405) are designed so that said groups of customization data include at least one image (400) of the structure of the nonvolatile memory of the portable electronic entity, representative of the content and file size of the portable electronic entity and of the memory areas of the portable electronic entity containing variables, and their value, excluding data specific to the future holder of the portable electronic entity, and
- the customization means (255, 260, 280, 325) are designed to complete the blank fields of said structure image with customization data.

6. Device according to any one of claims 1 to 5, **characterized in that** the electronic entity (100) is a secured microcontroller card conforming at least partly to the ISO 7816 standard.

7. Device according to any one of claims 1 to 5, **characterized in that** it includes:
- processing means (200, 230) designed to process said customization data and to generate at least one group of instructions for customizing the portable electronic entity, at least one group of customization instructions including at least one customization control instruction enabling a customization station (240) to control the correct execution of at least one customization instruction, at least one customization instruction of a group of customization instructions enabling the portable electronic entity to write data into the memory of the portable electronic entity, and
- means of transmitting each group of customization instructions.

8. Device according to claim 7, **characterized in that** the processing means (200, 230) are also designed to generate at least one customization report instruction enabling the customization station (240) to confirm to the device that at least a part of a group of customization instructions has been correctly executed, and to insert at least one report instruction in at least one group of customization instructions, the transmission means being designed to transmit at least one report instruction addressed to the customization station, the device also including means of receiving at least one report originating from the customization station.

9. Device according to any one of claim 7 or 8, **characterized in that** it also includes analysis means (200, 230) capable of analyzing at least one received report and initiating an action according to the result of said analysis.

10. Device according to any one of claims 7 to 9, **characterized in that** the processing means (200, 230) include means of defining groups of customization instructions such that the device needs the execution report of at least one of the preceding instructions to generate the first instruction of the next group of customization instructions.

11. Device according to any one of claims 7 to 10, **characterized in that** the communication means (200) are designed also to receive at least one identifier of said customization station.

12. Device according to any one of claims 7 to 11, **characterized in that** the processing means (200, 230) are designed to generate at least one group of customization instructions in parallel with the execution of a group of customization instructions by the customization station (240).

13. Device according to any one of claims 1 to 6, **characterized in that** it includes:
- means (260) of receiving at least one group of customization instructions from the portable electronic entity (100), at least one group of instructions including at least one customization control instruction making it possible to control the correct execution of at least one customization instruction, at least one customization instruction of a group of customization instructions enabling the portable electronic entity to write data into the memory of the portable electronic entity,
- means (255, 260, 280) of transmitting at least one customization instruction to the portable electronic entity, and
- processing means (260) designed to process each control instruction to control the correct execution of at least one customization instruction by the portable electronic entity.

14. Device according to claim 13, **characterized in that** the processing means (260) are designed to perform at least one control instruction on at least one customization instruction after the transmission means have transmitted, to the portable electronic entity, another customization instruction unaffected by said control instruction.

15. Device according to any one of claims 13 or 14, **characterized in that** the reception means (260) are also designed to receive at least one customization report instruction and the processing means (260) are also designed to prepare an execution report on at least one group of customization instructions, the device also including means of transmitting reports addressed to a customization server (200).

16. Device according to any one of claims 13 to 15, **characterized in that** the reception means are designed to extract at least one report instruction from at least one group of customization instructions.

17. Method for customizing a portable electronic entity, which comprises:
- a step (405) for storing, in a customization device, a plurality of groups of customization data,
- a step (420) for communicating with a non-rewritable memory of said portable electronic entity (100), to receive a first identifier retained in said non-rewritable memory,
- a step (430) for selecting, by said customization device, at least one group of customization data according to the first identifier, and
- a step (435) for customizing said portable electronic entity according to each selected group of customization data,
**characterized in that** said first identifier is at least a part of a message supplied by the portable electronic entity when it is powered up.
